# EUROPÄISCHE PATENTSCHRIFT

(11) **EP 3 992 603 B1**
(45) Veröffentlichungstag und Bekanntmachung des Hinweises auf die Patenterteilung: **17.04.2024**
(21) Anmeldenummer: 21151665.3
(22) Anmeldetag: 14.01.2021
(51) Int. Cl.: G01N 1/22

(54) **SYSTEM UND VERFAHREN ZUR SAMMLUNG UND BESTIMMUNG DER ART UND/ODER MENGE VON PATHOGENEN AUS DER LUFT**
SYSTEM AND METHOD FOR COLLECTING AND DETERMINING THE TYPE AND/OR QUANTITY OF PATHOGENS IN AIR
SYSTÈME ET PROCÉDÉ DE COLLECTION ET DE DETERMINATION DU TYPE ET DE LA QUANTITÉ DE PATHOGÈNES DANS L'AIR

(30) Priorität: 30.10.2020 DE 102020128664
(43) Veröffentlichungstag der Anmeldung: 04.05.2022
(73) Patentinhaber: Protektorwerk Florenz Maisch GmbH & Co. KG, 76571 Gaggenau (DE)
(72) Erfinder:
(74) Vertreter: Manitz Finsterwald Patent- und Rechtsanwaltspartnerschaft mbB

(56) Entgegenhaltungen:
- WO-A1-2019/133718
- DE-B3-102005 020 102
- US-A1- 2012 105 839
- US-A1- 2019 154 550
- LEDNICKY JOHN A ET AL: "Viable SARS-CoV-2 in the air of a hospital room with COVID-19 patients", INTERNATIONAL JOURNAL OF INFECTIOUS DISEASES, INTERNATIONAL SOCIETY FOR INFECTIOUS DISEASES, HAMILTON, CA, Bd. 100, 16. September 2020 (2020-09-16), Seiten 476-482, XP086345222, ISSN: 1201-9712, DOI: 10.1016/J.IJID.2020.09.025 [gefunden am 2020-09-16]

## Beschreibung

Die vorliegende Erfindung betrifft ein System umfassend zumindest einen Aerosolsammler und zumindest eine Analysevorrichtung sowie ein Verfahren zur Sammlung von Pathogenen aus der Luft.

Infektionen mit bestimmten Pathogenen können, insbesondere in schlecht gelüfteten Innenräumen oder in größeren Menschenansammlungen auf engem Raum, durch die Luft über Aerosole oder Tröpfchen erfolgen. Auf diesem Infektionsweg können beispielsweise Ansteckungen mit Bakterien, wie *Mycobacterium tuberculosis,* dem Erreger der Tuberkulose, oder *Legionella pneumophila,* einem Erreger der Legionellose, aber auch mit Sporen pathogener Pilze, etwa *Aspergillus fumigatus,* einem Erreger der Aspergillose, oder mit Viren, wie dem Masernvirus oder SARS-CoV-2, dem Erreger von COVID-19, erfolgen. Um solche Infektionskrankheiten diagnostizieren und ihre Ausbreitung eindämmen zu können, sind schnelle und zuverlässige Nachweisverfahren für die jeweiligen Erreger erforderlich.

Von besonderer epidemiologischer, wirtschaftlicher und sozialer Bedeutung ist in diesem Zusammenhang das Virus SARS-CoV-2. Bislang erfolgt der Nachweis einer Infektion mit diesem Virus üblicherweise durch PCR-Analyse eines von einer Testperson genommenen Rachen- und Nasenabstriches. Diese Vorgehensweise ist jedoch mit einer Reihe von Nachteilen verbunden.

So ist es erforderlich, dass sich jede zu testende Person bei einer Arztpraxis oder einem regionalen Testzentrum zu einem vorab vereinbarten Abstrichtermin einfindet. Diese Einrichtungen sind häufig überlastet, so dass keine zeitnahe Probennahme erfolgen kann. Weitere Verzögerungen ergeben sich aus dem anschließend nötigen Transport der Probe in ein diagnostisches Labor und der dort u.U. erst Tage später erfolgenden Analyse. Ein so ermitteltes Ergebnis besitzt daher immer den Charakter einer Momentaufnahme, die lediglich den oft schon länger zurückliegenden Infektionsstatus eines Individuums abbildet.

Der im Rahmen des üblichen Verfahrens notwendige tiefe Rachen- und Nasenabstrich ist für die Testperson unangenehm und macht es zudem erforderlich, dass sich das den Abstrich vornehmende medizinische Personal immer wieder in unmittelbare Nähe zu potentiell infektiösen Testpersonen begibt und sich somit einer erhöhten Ansteckungsgefahr aussetzt.

Außerdem ist bekannt, dass die herkömmliche Abstrich-Untersuchung häufig zu falsch negativen Ergebnissen führt, wie zum Beispiel in der Studie von L. M. Kucirka et al., Annals of Internal Medicine 2020, Vol. 173, Issue 4, S. 262-267 gezeigt. Der Erfolg der Abstrich-Methode hängt demnach sehr stark vom Zeitpunkt ab: Optimal für den Nachweis einer Infektion ist laut der Studie der Tag 8 nach der Ansteckung, wobei selbst in diesem Idealfall die mittlere falsch-negative Rate noch 20 % beträgt. Wird vor oder nach diesem Zeitpunkt ein Abstrich vorgenommen, ist die Falsch-Negativ-Quote noch wesentlich höher. Zudem kann das Ergebnis durch verschiedenste andere Faktoren verfälscht werden, zum Beispiel dadurch, dass der Abstrich nicht korrekt durchgeführt wird (etwa zu weit vorne in der Nase), ein ungeeignetes Tupfermaterial verwendet wird, nicht alle Rachenregionen der Testperson gleichermaßen betroffen sind oder sich die Testperson nicht an die übliche Vorgabe gehalten hat, bis zu eine Stunde vor dem Abstrich auf Essen, Trinken usw. zu verzichten.

Außerdem ist das nur an Individuen anwendbare, herkömmliche Abstrichverfahren ungeeignet, um festzustellen, ob die Luft in einem Raum SARS-CoV-2-Erreger oder andere Pathogene enthält, oder um das Vorliegen einer durch die Luft übertragbaren Infektion bei einer größeren Anzahl von Menschen gleichzeitig zu erfassen. Wenn es zu Ausbrüchen einer Krankheit wie COVID-19 kommt, können Infektionsketten daher bislang, wenn überhaupt, nur im Nachhinein mit mehreren Tagen Verzögerung durch aufwendige Verfolgung aller sozialen Kontakte von Infizierten rekonstruiert werden.

Ein Aerosolsammler zur Sammlung von Kondensat aus der Umgebungsluft ist aus US 2012/105839 A1 bekannt. Die Untersuchung eines aus Raumluft gesammelten Kondensats auf das Vorhandensein von SARS-CoV-2-RNA ist beschrieben in J. A. Lednicky et al., International Journal of Infectious Diseases 2020, Vol. 100, S. 476-482*.*

Somit besteht ein dringender Bedarf für einen Nachweis von durch die Luft übertragbaren Krankheitserregern, der dezentral, zeitnah, zuverlässig und ohne direkten Kontakt zwischen medizinischem Personal und Testpersonen erfolgt sowie eine große Anzahl von Personen gleichzeitig erfassen kann.

Diese Aufgabe wird gelöst durch das System gemäß Anspruch 1 sowie das Verfahren gemäß Anspruch 15. Vorteilhafte Ausführungsformen der Erfindung sind in den abhängigen Ansprüchen und im Folgenden widergegeben.

Optional umfasst das System ferner einen Sensor zur Analyse des Kondensats auf übertragbare Krankheitserreger sowie eine optische und/oder akustische Anzeige des Analyseergebnisses.

Das erfindungsgemäße System weist eine Reihe von Vorteilen gegenüber dem Stand der Technik auf. Das in der Auffangvorrichtung gesammelte Kondensat kann anstelle eines Abstrichs einem beliebigen Nachweisverfahren für einen über die Luft übertragbaren Erreger unterzogen werden. Die Notwendigkeit, zur Probennahme eine Arztpraxis, ein Testzentrum oder dergleichen aufzusuchen, entfällt. Aerosolsammler können stattdessen dezentral an der alltäglichen Aufenthaltsorten von zu testenden Personen platziert werden, beispielsweise in der Wohnung, am Arbeitsplatz sowie in Bildungs- und Betreuungseinrichtungen.

Die Entnahme und die Analyse des Kondensats aus dem Aerosolsammler können ohne direkten Kontakt von potentiell ansteckenden Testpersonen mit medizinischem Personal erfolgen. Für Letzteres kann somit das Infektionsrisiko gesenkt werden. Der Aerosolsammler greift zur Probennahme ausschließlich auf in der Umgebungsluft vorhandene Erreger zurück, die z.B. von der Testperson auf natürliche Weise durch Sprechen, Atmen, Husten, Niesen usw. ohnehin abgegeben werden. Daher entfällt auch die von Testpersonen oft als unangenehm empfundene Entnahme von Körpermaterial, wie etwa der beim üblichen SARS-Cov-2-Nachweis nötige tiefe Rachen- und Nasenabstrich. Somit kann durch die vorliegende Erfindung auch die Akzeptanz der Testung bei den Testpersonen verbessert werden.

Der Nachweis von Erregern über ein im Aerosolsammler gebildetes Kondensat ist außerdem zuverlässiger als derjenige über Abstriche oder anderes Körpermaterial, da die Kondensate über beliebig lange Zeiträume gesammelt werden können und der Pathogengehalt der Probe dabei weniger zufälligen Variationen ausgesetzt ist. Durch die vorliegende Erfindung kann somit die Wahrscheinlichkeit falsch negativer Befunde gesenkt werden. Ferner hat sich gezeigt, dass der Pathogennachweis aus dem Kondensat direkt erfolgen kann, d.h. ohne dass eine Aufbereitung des Kondensats, z.B. RNA-Ausfällung oder dergleichen, vor Durchführung einer Analyse notwendig ist.

Durch die Sammlung von Proben aus Luft statt aus Körpermaterial ergeben sich gegenüber dem Stand der Technik weitere Vorteile: Mit dem Aerosolsammler kann auch unabhängig davon, ob Personen anwesend sind, festgestellt werden, ob die Luft in einem beliebigen Raum mit Pathogenen belastet ist, um z.B. entscheiden zu können, ob ein Raum ohne Schutzausrüstung gefahrlos betreten werden kann oder ob eine Lüftungsanlage zufriedenstellend die Luft austauscht. Beispielhafte Anwendungsmöglichkeiten hierfür bestehen etwa bei der Infektionsprävention in Krankenhäusern, aber auch beim Nachweis von Schimmelbefall in Gebäuden.

Darüber hinaus erlaubt es der Aerosolsammler, anhand des gewonnenen Kondensats nicht nur bei einzelnen Individuen, sondern auch bei einer größeren, an einem Ort anwesenden Anzahl von Individuen gleichzeitig zu erfassen, ob durch die Luft übertragbare Pathogene ausgeschieden werden bzw. vorhanden sind. Er lässt sich daher ganz besonders vorteilhaft überall dort einsetzen, wo ein Aufeinandertreffen mehrerer Personen zwar unvermeidlich ist, aber die unbemerkte Ausbreitung einer Infektionskrankheit verhindert werden soll, also beispielsweise in Schulen, Kindergärten, öffentlichen Verkehrsmitteln, Krankenhäusern, Arztpraxen, Alters- und Behindertenheimen, Sportanlagen, Gaststätten, Hotels, Büros, Behörden, Industrie- und Handwerksbetrieben, im Einzelhandel, bei Messen, Konferenzen und religiösen oder kulturellen Veranstaltungen, aber auch bei privaten Anlässen, wie Hochzeiten oder Geburtstagsfeiern.

Das Abscheiden des Kondensats kann unmittelbar auf der Kondensationsfläche erfolgen. Hierbei steht die Kondensationsfläche in direktem Kontakt mit der zu untersuchenden Luft.

Ebenfalls ist es möglich, dass das Kondensat nicht direkt auf der Kondensationsfläche abgeschieden wird, sondern die Kondensationsfläche zum Beispiel an einer Fläche der Auffangvorrichtung anliegt und dadurch zumindest ein Abschnitt der Kondensationsfläche gekühlt wird, sodass sich das Kondensat direkt auf der Auffangvorrichtung abscheidet, jedoch nicht unmittelbar auf der Kondensationsfläche. In diesem Fall ist die Kondensationsfläche der Kühlvorrichtung von der Auffangvorrichtung bedeckt. Beispielsweise kann die Auffangvorrichtung als Gefäß ausgebildet sein, welches insbesondere in eine Kühlvorrichtung eingesetzt und mit einer Kondensationsfläche, d.h. eine gekühlte Fläche, die eine Kondensation von Luftfeuchtigkeit bewirkt, in thermischem Kontakt stehen. Da die Auffangvorrichtung in thermischem Kontakt mit der Kondensationsfläche der Kühlvorrichtung steht, kann an einer Innenseite der als Gefäß ausgeführten Auffangvorrichtung Luftfeuchtigkeit auskondensieren. Insbesondere kann die Kühlvorrichtung als eine eine Manschette ausgebildet sein, die die Auffangvorrichtung ganz oder teilweise umschließt. Das Gefäß weist hierbei insbesondere einen Boden, eine Seitenwand sowie eine Öffnung auf. Der Querschnitt des Gefäßes ist beispielsweise rund, kann aber auch andere Geometrien aufweisen. Im Falle anderer Geometrien bezieht sich der Begriff "die Seitenwand" gegebenenfalls auf alle Seitenwände. Über die Öffnung kann die zu untersuchende Luft der Innenseite des Gefäßes zugeführt werden, beispielsweise durch eine Vorrichtung zur Anströmung der Kühlvorrichtung, wobei in diesem Fall die Kühlvorrichtung mittelbar angeströmt wird, d.h. der und/oder die mit der Kondensationsfläche in Kontakt stehende Boden bzw. Seitenwand wird angeströmt, sodass sich an der Innenseite des Gefäßes Kondensat bilden kann.

Auch kann die Auffangvorrichtung als Sensor ausgebildet sein, zum Beispiel in Form eines Teststreifens, der auf der Kondensationsfläche oder an einem Boden oder einer Seitenwand der oben beschriebenen als Gefäß ausgeführten Ausführungsform angebracht ist. Der Sensor kann fest installiert oder austauschbar sein. Insbesondere im Falle eines Teststreifens als Sensor ist eine Austauschbarkeit desselben bevorzugt. Es ist ferner bevorzugt, dass eine analoge oder digitale Anzeige vorgesehen ist, beispielsweise in Form eines Andon-Boards, um das von dem Sensor erfasste Analyseergebnis anzuzeigen.

Die Kühlvorrichtung kann ein geeignetes flüssiges und/oder festes Kühlmittel enthalten. Insbesondere kann die Kühlvorrichtung in ihrem Inneren einen oder mehrere verschließbare Hohlräume zur Aufnahme des Kühlmittels aufweisen. Ein bevorzugtes Kühlmittel ist Wasser, das in Form von Eis und/oder flüssigem Wasser vorliegt. Das Kühlmittel kann jedoch auch eine Mischung mehrerer Stoffe sein, beispielsweise eine wässrige Lösung eines oder mehrerer Salze, wie Natriumchlorid und/oder Calciumchlorid, oder ein Gemisch von Wasser mit einem oder mehreren Alkoholen, wie Ethanol, Glycerin, Ethylenglykol, Diethylenglykol und/oder Propylenglykol. Zusätze von Salzen oder Alkoholen können vorteilhaft sein, da sie es ermöglichen, ein wässriges Kühlmittel auf Temperaturen unter 0 °C abzukühlen, ohne dass es sich dabei verfestigt und ausdehnt.

In einer bevorzugten Ausführungsform kann die Kühlvorrichtung austauschbar sein und ein festes oder flüssiges Kühlmittel enthalten, das vor Beginn des Sammelns abgekühlt worden ist, beispielsweise durch Lagerung bei Temperaturen unterhalb von 10°C, wie in einem Kühlschrank oder einer Gefriertruhe.

Der Aerosolsammler kann eine Vorrichtung zur Anströmung der Kühlvorrichtung, vorzugsweise der Kondensationsfläche, mittels eines Gasstroms umfassen. Der Gasstrom ist bevorzugt ein Luftstrom, bevorzugter ein aus der zu untersuchenden Luft gebildeter Luftstrom. Die Vorrichtung zur Anströmung der Kühlvorrichtung kann auf unterschiedliche Art und Weise ausgebildet sein, z.B. in Form eines Ventilators oder eines Mundstücks mit welchem die zu untersuchende Luft über die Kondensationsfläche leitbar ist.

Der Aerosolsammler kann eine Vorrichtung zur chemischen Kühlung der Kühlvorrichtung durch eine endotherme chemische Reaktion umfassen. Dies kann vorteilhaft sein, wenn am Aufstellungsort des Aerosolsammlers keine elektrische Energie und kein Kühlschrank oder dergleichen zur Verfügung stehen.

Die Kühlvorrichtung umfasst eine elektrische Kühlung, die mindestens ein Peltier-Element umfasst. Noch bevorzugter umfasst die Kühlvorrichtung eine elektrische Kühlung mit mindestens einem Peltier-Element in Kombination mit einer Vorrichtung zur Anströmung mit einem Luftstrom, die so angeordnet ist, dass eine wärmere Seite des Peltier-Elements durch den Luftstrom kühlbar ist. Insbesondere ist an der wärmeren Seite des Peltier-Elements, d.h. die Seite des Peltier-Elements, die sich aufwärmt, ein Wärmetauscher vorgesehen. Besonders bevorzugt wird hierbei oder zusätzlich ein Luftstrom auch über die Kondensationsfläche der Kühlvorrichtung geführt. Die Vorrichtung zur Anströmung mit einem Luftstrom ist beispielsweise ein Lüfter.

In einer bevorzugten Ausführungsform ist die Kühlvorrichtung als Venturi-Düse ausgebildet, die von einem Gasstrom, bevorzugt einem Luftstrom, durchströmbar ist, wodurch die Oberfläche der als Venturi-Düse ausgebildeten Kühlvorrichtung kühlbar ist, sodass eine Kondensationsfläche vorliegt. Durch die Kompression in der Venturi-Düse wird die Strömungsgeschwindigkeit erhöht, wodurch sich ein Unterdruck bildet. Dieser Unterdruck führt zu einer Abkühlung der Venturi-Düse.

Zum Abscheiden von Kondensat ist die Kondensationsfläche auf eine Temperatur unterhalb des Taupunkts abkühlbar. Vorzugsweise kann die Kondensationsfläche der Kühlvorrichtung auf eine Temperatur unterhalb von 10°C, bevorzugt auf eine Temperatur unterhalb von 8°C, bevorzugter auf eine Temperatur unterhalb von 6°C, noch bevorzugter auf eine Temperatur unterhalb von 5°C, am bevorzugtesten auf eine Temperatur unterhalb von 2°C abgekühlt werden.

Die Kondensationsfläche der Kühlvorrichtung kann ein Material mit einer Wärmeleitfähigkeit von größer oder gleich 0,15 W/(m K), bevorzugt 0,25 W/(m K), bevorzugter größer oder gleich 0,75 W/(m K), noch bevorzugter größer oder gleich 15,00 W/(m K), am bevorzugtesten größer oder gleich 100,0 W/(m K), umfassen.

Die Kondensationsfläche der Kühlvorrichtung kann aus einem Polymer, einem metallischen Werkstoff, einem Glas oder Kombinationen derselben, bevorzugt aus einem metallischen Werkstoff oder Glas, insbesondere aus einem metallischen Werkstoff, insbesondere aus rostfreiem Stahl, Aluminium, Aluminiumlegierungen, Kupfer, Kupferlegierungen, Silber, Silberlegierungen, Gold oder Goldlegierungen bestehen. In einer besonders bevorzugten Ausführungsform besteht die Kondensationsfläche aus Silber, einer Silberlegierung, Gold oder einer Goldlegierung, da diese Werkstoffe eine überragende Wärmeleitfähigkeit und Korrosionsbeständigkeit bieten. In einer weiteren besonders bevorzugten Ausführungsform besteht die Kondensationsfläche aus rostfreiem Stahl, Aluminium, einer Aluminiumlegierung, Kupfer oder einer Kupferlegierung, da diese Werkstoffe den Vorteil eines niedrigen Preises bei dennoch guter Wärmeleitfähigkeit und Korrosionsbeständigkeit in Verbindung mit hoher Wärmekapazität bieten. In einer anderen besonders bevorzugten Ausführungsform kann die Kondensationsfläche auch aus mehreren Schichten verschiedener Metalle aufgebaut sein, beispielsweise aus einem unedleren Metall, das auf seiner äußeren, mit der Luft in Kontakt stehenden Seite mit einer Schicht eines edleren Metalls überzogen ist. Die Oberfläche der Kondensationsfläche kann beschichtet sein, insbesondere mit einer hydrophoben Schicht, die ein Abperlen anfallenden Kondensats bewirkt. Die Oberfläche kann insbesondere einen Lotuseffekt aufweisen. Kondensationsflächen aus Glas haben sich ebenfalls als ausgezeichnet im Hinblick auf Glattheit, Abperlen des Kondensats und Abstreifen des Kondensats erwiesen, sodass Kondensationsflächen aus Glas bei hierin beschriebenena Ausführungsformen bevorzugt sind.

Die Kühlvorrichtung kann auf unterschiedliche Weisen ausgestaltet sein. Eine besonders bevorzugte Ausgestaltung der Kühlvorrichtung sieht vor, dass diese aus einem Körper besteht, an dessen Oberfläche sich Kondensat aus der ihn umgebenden Luft bildet, d.h. die Oberfläche des Körpers ist die Kondensationsfläche, an welcher sich Luftfeuchtigkeit abscheidet. Eine erfindungsgemäße Variante sieht vor, dass die Kühlvorrichtung eine Kegelform aufweist. Ist die Auffangvorrichtung unterhalb der Kegelspitze angeordnet, kann an einer äußeren Oberfläche des Kegels gebildetes Kondensat zur Kegelspitze laufen und von dieser in die Auffangvorrichtung abtropfen. Die Kegelspitze hat hierbei die Funktion eines Abtropfzapfens. Die Kühlvorrichtung kann prinzipiell jede beliebige Form aufweisen, solange sie genügend Wärmekapazität aufweist, damit nach dem Abkühlen eine gewisse Menge Kondensat an der Kondensationsfläche gebildet wird, wenn die Kühlvorrichtung mit Luft in Berührung kommt. Die Kühlvorrichtung stellt somit eine Kältefalle dar, an welcher Luftfeuchtigkeit auskondensiert.

Gemäß einer weiteren Ausführungsform ist die bewegliche Kondensationsfläche der Kühlvorrichtung bandförmig, bevorzugt als Polymerband oder Metallband, besonders bevorzugt als Metallband ausgebildet. Alternativ kann die bewegliche Kondensationsfläche scheibenförmig ausgestaltet sein, bevorzugt als Glasscheibe, insbesondere bevorzugt als eine rotierende Glasscheibe, noch weiter bevorzugt eine runde oder elliptische Glasscheibe, die vorzugsweise rotierbar ist. Gemäß einer anderen Ausführungsform ist die bewegliche Kondensationsfläche der Kühlvorrichtung scheibenförmig ausgebildet, bevorzugt als Glasscheibe oder Metallscheibe, insbesondere bevorzugt als rotierende Glasscheibe oder Metallscheibe. Die Scheibe weist vorzugsweise, insbesondere an ihrem Mittelpunkt, eine Öffnung auf, durch welche Kondensat, insbesondere abgestreiftes Kondensat, tropfen kann, z.B. in eine Auffangvorrichtung. Die Rotationsachse der Scheibe ist vorzugsweise geneigt, so dass abgestreiftes Kondensat in Richtung einer vorgesehenen Öffnung fließen kann, d.h. der Abstreifer ist vorzugsweise so angeordnet, dass das abgestreifte Kondensat aufgrund der Schwerkraft zu der Öffnung fließt.

Gemäß einer erfindungsgemäßen Ausführungsform ist die Kondensationsfläche bandförmig ausgestaltet, insbesondere als Metallband. Hierbei ist es bevorzugt, wenn die bandförmige Kondensationsfläche mit einer abkühlbaren Seite eines Piezo-Elements in thermischen Kontakt steht, entweder durch direkten Kontakt oder insbesondere durch einen zwischen der Kondensationsfläche und dem Metallband eingefügten Körper, insbesondere in Form eines Metallblocks. Ein derartiger eingefügter Körper erlaubt einen besseren Kontakt mit einem typischerweise flächig ausgestaltetem Peltier-Element, insbesondere kann hierdurch die Kontaktfläche vergrößert werden. Sofern der eingefügte Körper ein Metallkörper ist, ist eine hohe Wärmeleitfähigkeit gewährleistet, sodass Wärme von dem Metallband über den Metallkörper von einer abkühlbaren Seite des Peltier-Elements auf eine sich aufwärmende Seite des Peltier-Elements transportiert wird, d.h. das Metallband kühlt sich ab.

Vorzugsweise wir das Band über zwei oder mehr Rollen geführt und von zumindest einer dieser Rollen angetrieben. Das Metallband kann hierbei kontinuierlich in Bewegung sein oder diskontinuierlich von einer Steuereinheit in Bewegung versetzt bzw. angehalten werden, d.h. es verweilt eine Zeitspanne, bis sich Kondensat auf der mit dem Metallblock in Kontakt stehenden Oberfläche, d.h. der Kondensationsfläche, Kondensat gebildet hat.

Vorzugsweise ist in Bewegungsrichtung des Metallbandes dem Peltier-Element folgend ein Abstreifer vorgesehen. Dieser Abstreifer kann ein sich auf dem Metallband gebildetes Kondensat abstreifen, sodass dieses in eine Auffangvorrichtung tropft. Ebenfalls kann ein Desinfektionsmittel in Form einer UV-C Lampe vorhanden sein, mit welcher sich gegebenenfalls noch nach dem Abstreifen auf dem Metallband befindliche Pathogene neutralisieren lassen. Vorzugsweise ist das Desinfektionsmittel daher in Bewegungsrichtung des Metallbandes dem Abstreifer nachfolgend angeordnet.

Sofern der Kondensatstropfen ein Pathogen aufweist, kann dieses durch die NAAT-Analyse nachgewiesen werden, wobei sich ein Pathogennachweis z.B. in Form einer Farbänderung der Reaktionslösung ausdrückt. Die Gegenwart eines Pathogens kann so durch einen Sensor, z.B. in Form eines CCD-Chips einer Kamera, detektiert werden. Die Signale des Sensors werden von einer Auswerteeinheit ausgewertet, welche bei Detektion des Pathogens eine vorbestimmte Aktion ausführen kann, z.B. Erzeugen einer Warnung, dass ein Pathogen detektiert wurde und/oder eines Hinweises, dass die Auffangvorrichtung, z.B. ein Mikroreaktionsgefäß, auszutauschen ist. Alternativ oder zusätzlich zu einer Farbänderung kann der Sensor, z.B. in Form eines CCD-Chips, detektieren, ob Kondensat in der Auffangvorrichtung aufgefangen wurde, woraufhin von der Auswerteeinheit eine vorbestimmte Aktion veranlasst wird, z.B. Erwärmen des Mikroreaktionsgefäßes, um eine NAAT-Analyse, insbesondere eine RT-LAMP-Analyse, zu beginnen oder Ausgeben eines Hinweises, dass die Auffangvorrichtung nun entnommen werden kann.

Der Aerosolsammler weist vorzugsweise eine Auswerteeinheit, z.B. einen Computer, auf, welche einen Zustand des Aerosolsammlers bestimmt. Der Zustand des Aerosolsammlers kann beispielsweise über einen Sensor bestimmt werden, z.B. in Form eines CCD Chips, der Daten an die Auswerteeinheit übermittelt. Anhand dieser Daten kann die Auswerteeinheit bestimmen, ob beispielsweise die Auffangvorrichtung und/oder die Analysevorrichtung zu entnehmen bzw. auszutauschen ist. Ebenso kann von einem Sensor bestimmt werden, ob sich auf der Kondensationsfläche Kondensat gesammelt hat. Wird von der Auswerteeinheit festgestellt, dass sich Kondensat auf der Kondensationsfläche gesammelt hat, kann durch ein Signal an die Steuerungseinheit die Kondensationsfläche relativ zu einem Abstreifer bewegt werden, insbesondere wird die Kondensationsfläche an dem Abstreifer vorbeigeführt, um das Kondensat abzustreifen und einer Auffangvorrichtung zuzuführen, die insbesondere Bestandteil einer Analysevorrichtung ist.

Ferner ist es insbesondere bevorzugt, dass die Auswerteeinheit mit einem Kommunikationsmodul gekoppelt ist, welches über bekannte Protokolle eine Nachricht über einen von der Auswerteeinheit bestimmten Zustand versenden kann. Vorzugsweise sind Auswerteeinheit und Steuereinheit in einer Recheneinheit vereint. Die Recheneinheit ist beispielsweise ein Computer.

Gemäß einer weiteren Ausführungsform weist der Aerosolsammler ferner ein drahtloses Kommunikationssystem, einen Controller, der einen oder mehrere Prozessoren und einen nichtflüchtiges computerlesbares Speichermedium umfasst auf. Das nichtflüchtige computerlesbare Speichermedium ist ein persistenter Speicher, wie zum Beispiel SSDs, Flash-Speicher und HDDs, der Befehle zur Ausführung durch den einen oder die mehreren Prozessoren speichert, um ein Verfahren umfassend die folgenden Schritte durchzuführen: durch die Analysevorrichtung das Vorhandensein oder Fehlen eines Krankheitserregers im Aerosolkondensat nachweisen; Veranlassen des Aerosolsammlers, ein drahtloses Kommunikationssignal durch das drahtlose Kommunikationssystem zu übertragen, wobei das drahtlose Kommunikationssignal Daten umfasst, die für die Anwesenheit oder Abwesenheit des Erregers repräsentativ sind.

Das nichtflüchtige Speichermedium und die einen oder mehreren Prozessoren sind Bestandteil eines Computersystems, welches ferner einen Arbeitsspeicher aufweist. Computersysteme sind dem Fachmann bekannt.

Das drahtlose Kommunikationssignal kann Daten an ein mobiles Gerät oder in eine Cloud übertragen. Hierfür sind verschiedene Signale und Kommunikationsprotokolle bekannt. So kann es sich beispielsweise um ein Kurzwellensignal handeln. Beispielhaft kann es sich um ein Mobilfunksignal (3G, 4G, LTE, 5G etc.), ein Bluetooth-Signal, oder ein WLAN-Signal (z.B. nach IEEE 802.11) handeln, insbesondere um ein Bluetooth-Signal, oder ein WLAN-Signal (z.B. nach IEEE 802.11).

Ferner können die auf dem nichtflüchtigen Speicher hinterlegten Befehle ferner folgende Verfahrensschritte umfassen: Empfangen eines von einem mobilen Gerät gesendeten drahtlosen Kommunikationssignals durch das drahtlose Kommunikationssystem, wobei das empfangene drahtlose Signal einen Identifikationsparameter umfasst; Speicherung des Identifikationsparameters in dem nichtflüchtigen Speichermedium des Aerosolsammlers. Bei dem Identifikationsparameter kann es sich um den Namen, die Telefonnummer, das Alter, Patientendaten oder eine andere eindeutige Kennung handeln, die mit dem mobilen Endgerät assoziiert ist. Es kann auch mehr als ein Identifikationsparameter in der Speichereinheit des Aerosolsammlers erfasst werden.

Ferner können die auf dem nichtflüchtigen Speicher hinterlegten Befehle ferner folgende Verfahrensschritte umfassen: Erzeugen eines Zeitstempels, der einem Zeitwert entspricht, der auf der Grundlage eines drahtlosen Kommunikationssignals erzeugt wird, das den Identifikationsparameter umfasst, den das drahtlose Kommunikationssystem von dem mobilen Gerät empfängt; und Nachweis des Vorhandenseins oder Nichtvorhandenseins eines Erregers durch den Analysator zu einem Zeitpunkt nach der Erzeugung des Zeitstempels.

Es können Identifikationsparameter von einem weiteren oder mehreren weiteren mobilen Geräten in der Speichereinheit des Aerosolsammlers gespeichert werden. Bei Speicherung von Identifikationsparametern mindestens eines weiteren mobilen Geräts kann das Verfahren ferner das Erzeugen eines weiteren Zeitstempels, der einem Zeitwert entspricht, der auf der Grundlage eines weiteren drahtlosen Kommunikationssignals erzeugt wird, das die drahtlose Kommunikationsvorrichtung von einem weiteren mobilen Gerät erreicht, umfassen, wobei das empfangene Kommunikationssignal einen Identifikationsparameter umfasst, der für das weitere mobile Gerät eindeutig ist.

Ferner kann das nichtflüchtige Speichermodul einen Befehl speichern, der, wenn er von dem einen oder mehreren Prozessoren ausgeführt wird, folgenden Verfahrensschritt umfasst: Veranlassen des Aerosolsammlers, einen Alarm zu erzeugen, wenn das Vorhandensein eines Krankheitserregers festgestellt wird, optional die Übertragung eines Signals über das drahtlose Kommunikationssystem an ein mobiles Gerät und/oder mobile Geräte, deren eindeutiger Identifikationsparameter in dem Aerosolsammler gespeichert ist.

Auf dem nichtflüchtige Speichermodul kann zudem ein Befehl gespeichert sein, der, wenn er von dem einen oder mehreren Prozessoren ausgeführt wird, folgenden Verfahrensschritt umfasst: Aktivieren einer Desinfektionseinheit, d.h. eines Desinfektionsmittels, z.B. in Form einer UV Lampe, um die Desinfektion der Kondensationsfläche vorzunehmen.

Die Kühlvorrichtung kann beweglich ausgebildet sein und während oder nach dem Sammelvorgang zumindest zeitweise bewegt werden. Bevorzugt ist die Kühlvorrichtung beweglich über Rollen geführt. In einer bevorzugten Ausführungsform ist die Kühlvorrichtung ein bewegliches, über Rollen geführtes Metallband. Der Aerosolsammler kann ferner ein Vibrationselement aufweisen, durch welches zumindest die Kondensationsfläche in Vibration versetzbar ist. Hierdurch kann ein Abtropfen des Kondensats unterstützt werden. Das Vibrationselement kann beispielsweise ein Exzenter oder eine elektromagnetische Vorrichtung, insbesondere ein Piezoelement sein. Das Vibrationselement kann auf oder an der Kühlvorrichtung, insbesondere der Kondensationsfläche, angeordnet sein.

Die Kühlvorrichtung an sich kann vor Verwendung bei niedriger Temperatur gelagert werden, z.B. 10°C oder niedriger, oder zur Verwendung mit einem entsprechend gekühlten Medium befüllt werden.

Die Auffangvorrichtung ist bevorzugt so unterhalb der Kühlvorrichtung angeordnet, dass auf der Kondensationsfläche gebildetes Kondensat durch Einwirkung der Schwerkraft, d.h. durch einfaches Herabtropfen oder -laufen, der Auffangvorrichtung zuführbar ist.

Vorzugsweise weist die Kühlvorrichtung eine Abtropfstelle auf, etwa in Form einer Abtropfkante oder eines Abtropfzapfens. Hierdurch kann kontrolliert werden, an welcher Stelle sich das Kondensat in der Auffangvorrichtung sammelt. Dies ist insbesondere dann vorteilhaft, wenn die Auffangvorrichtung ein nur geringes Volumen aufweist, wie zum Beispiel ein Untersuchungsgefäß für eine Nachweisreaktion, d.h. ein Mikroreaktionsgefäß.

Der Aerosolsammler kann zudem einen Abstreifer umfassen, mit dem auf der Kondensationsfläche gebildetes Kondensat abstreifbar ist. Dies kann beispielsweise dann vorteilhaft sein, wenn entstandenes flüssiges Kondensat bei bloßer Einwirkung der Schwerkraft nicht vollständig in die Auffangvorrichtung tropft oder läuft, oder wenn die Temperatur der Kondensationsfläche so niedrig ist, dass das Kondensat gefriert und somit zumindest teilweise in festem Zustand an der Kondensationsfläche haftet. Zudem kann mit Hilfe eines Abstreifers bereits dann eine Probe des Kondensats von der Kondensationsfläche genommen und einer weiteren Untersuchung zugeführt werden, wenn sich noch kein Kondensat in der Auffangvorrichtung gesammelt hat, sondern lediglich auf der Oberfläche der Kondensationsfläche vorliegt.

Der Abstreifer und die Auffangvorrichtung können eine bauliche Einheit bilden. Der Abstreifer kann jedoch auch eine von der Auffangvorrichtung separate Einheit sein. Abstreifer und Auffangvorrichtung können so ausgebildet sein, dass sich abgestreiftes Kondensat in oder an der Auffangvorrichtung sammelt. Alternativ können Abstreifer und Auffangvorrichtung so ausgebildet sein, dass sich abgestreiftes Kondensat im Abstreifer sammelt. Hierbei ist es besonders bevorzugt, wenn der Abstreifer eine Entnahmevorrichtung aufweist, in welcher das abgestreifte Kondensat zunächst aufgenommen wird und dann einer Analyse zugeführt werden kann. Es kann dabei die Entnahmevorrichtung die Auffangvorrichtung des Aerosolsammlers sein, wobei der Aerosolsammler noch zumindest eine oder genau eine weitere Auffangvorrichtung aufweisen kann.

In einer bevorzugten Ausführungsform ist zumindest ein Teil der Auffangvorrichtung austauschbar. In einer anderen bevorzugten Ausführungsform ist die gesamte Auffangvorrichtung austauschbar. Dies hat den Vorteil, dass beispielsweise die Auffangvorrichtung mitsamt gesammelter Probe entnommen und zur Analyse in ein Labor gebracht werden kann, während der Aerosolsammler mit einer neuen Auffangvorrichtung bestückt werden und zur Sammlung weiteren Kondensats genutzt werden kann. Werden nacheinander mehrere Auffangvorrichtungen mit Kondensat befüllt, lässt sich das gegebenenfalls festgestellte Auftreten eines Pathogens im Kondensat somit nicht nur räumlich, sondern auch zeitlich eingrenzen.

Gemäß einer bevorzugten Ausgestaltung des Aerosolsammlers ist die Kondensationsfläche der Kühlvorrichtung von der Auffangvorrichtung bedeckt. Durch Abkühlen der Kondensationsfläche entsteht innerhalb der Auffangvorrichtung eine kalte Stelle, an welcher Luftfeuchtigkeit auskondensieren kann, wodurch sich das Kondensat direkt in der Auffangvorrichtung bildet. Weiter ist es bevorzugt, wenn die Auffangvorrichtung von der Kondensationsfläche ablösbar ist. So kann nach der Kondensatsammlung die Auffangvorrichtung von der Kühlvorrichtung getrennt werden, verschlossen werden und einer Analyse zugeführt werden. Die Auffangvorrichtung kann auf unterschiedlichste Weise ausgestaltet sein. Im Fall einer Bedeckung der Kondensationsfläche durch die Auffangvorrichtung ist die Auffangvorrichtung vorzugsweise als Folie ausgestaltet. Eine derartige Folie kann, nach dem sich Kondensat darauf gebildet hat, von dem Aerosolsammler gelöst und in ein verschließbares Transportbehältnis, z.B. ein Röhrchen, gegeben werden. Beispielsweise können Ränder der Folie mit Klebeflächen versehen sein. Dies ermöglicht es, die Folie nach der Kondensatsammlung zusammenzufalten, um das Kondensat vor Verlust oder Kontamination zu schützen.

Die Auffangvorrichtung ist bevorzugt verschließbar, bevorzugter wasserdicht verschließbar, noch bevorzugter wasser- und luftdicht verschließbar. In einer besonders bevorzugten Ausführungsform ist die Auffangvorrichtung austauschbar sowie wasser- und luftdicht verschließbar. Dies hat den Vorteil, dass der Transport einer entnommenen Auffangvorrichtung sicher ist, da durch das wasser- und luftdichte Verschließen sowohl ein unerwünschter Austritt des potentiell infektiösen Materials als auch eine Kontamination der Probe verhindert wird.

Die Auffangvorrichtung kann aus einem Polymer, einem metallischen Werkstoff, einem Glas, oder Kombinationen derselben bestehen. Bevorzugt besteht die Auffangvorrichtung aus Glas oder einem Polymer, bevorzugter aus einem zumindest teilweise transparenten Polymer. Polymergefäße sind leichter und weniger zerbrechlich als solche aus Glas. Die Verwendung eines transparenten Materials erlaubt es zudem, den Füllstand der Auffangvorrichtung mit bloßem Auge zu erkennen. Beispielsweise kann die Auffangvorrichtung aus Polyethylen oder Polypropylen bestehen.

Das Material der Auffangvorrichtung und/oder der Kühlvorrichtung ist vorzugsweise Autoklavierbar bei 121°C oder bei 134°C.

Der Aerosolsammler kann ein Gitter aufweisen, das die Kühlvorrichtung, bevorzugt sowohl die Kühlvorrichtung als auch die Auffangvorrichtung abdeckt. Dadurch wird eine Kontamination der Kühlvorrichtung und/oder des Kondensats, etwa durch Berührung mit bloßen Händen oder durch Hineingeraten von Schmutzpartikeln, Insekten und dergleichen verhindert. Zudem ist das Gitter bevorzugt abnehmbar ausgebildet, was bei Bedarf die Reinigung des Gitters sowie den Zugang zur Kühlvorrichtung und zur Auffangvorrichtung erleichtert. Das Gitter kann beispielsweise als Drahtgitter mit einer Maschenweite von bevorzugt 10 mm oder weniger, bevorzugter 5 mm oder weniger, noch bevorzugter 2 mm oder weniger, am bevorzugtesten 1 mm oder weniger ausgebildet sein. Das Gitter kann beispielsweise aus Edelstahl oder einer Aluminiumlegierung bestehen.

Vorzugsweise ist eine Abdeckung vorgesehen, mit welcher der Aerosolsammler nach Gebrauch verschlossen werden kann. Dies verhindert, dass ein Benutzer in Kontakt mit möglicherweise infektiösem Kondensat kommt.

Bei einer weiteren vorteilhaften Ausführungsform ist der Aerosolsammler mit einem Desinfektionsmittel, vorzugsweise einer UV-Lampe, ausgestattet, wodurch bei Bedarf die Auffangvorrichtung und/oder die Kühlvorrichtung desinfiziert werden kann. Vorzugsweise erzeugt die UV-Lampe UV-C Licht.

In einer Ausführungsform kann der Aerosolsammler ein Mundstück umfassen, durch das die ausgeatmete Luft einer Testperson direkt vom Mund der Testperson der Kühlvorrichtung zuführbar ist, so dass gezielt eine Kondensat-Probe von einer bestimmten Testperson erhältlich ist. Das Mundstück ist bevorzugt abnehmbar ausgebildet, was aus hygienischen Gründen vorteilhaft ist, da das nach Verwendung abgenommene Mundstück entweder separat desinfiziert und wiederverwendet oder entsorgt und durch ein neues Mundstück ersetzt werden kann.

Die zu untersuchende Luft kann prinzipiell jede Art von Luft sein. Vorzugsweise handelt es sich um Raumluft oder Atem luft, d.h. unmittelbar ausgeatmete Luft. Im Fall von Atemluft wird der Atem einer Person auf den Aerosolsammler gerichtet. Hierfür kann beispielsweise ein Mundstück verwendet werden, um die Atemluft zu lenken.

Obwohl die Nachteile im Stand der Technik sowie die Vorteile des erfindungsgemäßen Aerosolsammlers bis hierher vor allem exemplarisch am Beispiel des SARS-CoV-2-Virus erläutert worden sind, ist die vorliegende Erfindung keineswegs auf diesen speziellen Krankheitserreger beschränkt.

Beispielsweise können auch andere pathogene Viren aus der Familie der *Coronaviridae* gesammelt werden, etwa SARS-CoV-1 oder HCoV-NL63. Mit dem erfindungsgemäßen Aerosolsammler lassen sich außerdem durch die Luft übertragbare, krankheitserregende Viren aus anderen Familien, wie das Masernvirus (MeV), ferner pathogene Bakterien, etwa *Mycobacterium tuberculosis,* oder aus der Gattung *Legionella,* z.B. *Legionella pneumophila,* und auch Sporen von pathogenen Pilzen, etwa aus der Gattung *Aspergillus,* z.B. *Aspergillus fumigatus,* sammeln.

Obwohl der Aerosolsammler sich, wie oben beschrieben, hervorragend zur Sammlung von Humanpathogenen eignet, kann er ebenso genutzt werden, um Tier- oder Pflanzenpathogene aus der Luft zu sammeln, wodurch sich unter anderem Anwendungsmöglichkeiten in der Veterinärmedizin und der Landwirtschaft ergeben. Beispiele für durch die Luft übertragbare Tier- bzw. Pflanzenpathogene, die hohe wirtschaftliche Schäden verursachen können, sind etwa das klassische Schweinepest-Virus oder die Sporen des Pilzes *Pseudoperonospora cubensis,* der bei Gurken und anderen Nutzpflanzen den sogenannten Falschen Mehltau auslöst. Vorteilhafterweise können diese oder andere Tier- und Pflanzenpathogene mit dem erfindungsgemäßen Aerosolsammler gesammelt werden, wenn dieser an einem geeigneten Ort, beispielsweise in einem Viehstall oder einem Gewächshaus aufgestellt wird. Dies ermöglicht die frühzeitige Einleitung gezielter Eindämmungsmaßnahmen, zum Beispiel das Ausbringen geeigneter, gegen einen detektierten Pilz wirksamer Fungizide.

Das erfindungsgemäße System weist gegenüber dem Stand der Technik den zusätzlichen Vorteil auf, dass der Erregernachweis innerhalb kurzer Zeit an Ort und Stelle erfolgen kann, so dass Transporte von gesammelten Proben in ein Labor und die damit verbundenen Wartezeiten entfallen. Dadurch wird eine kontinuierliche Überwachung der Raumluft in Bezug auf ihren Gehalt an relevanten Pathogenen möglich. Insbesondere in Räumen, in denen sich eine große Anzahl potentiell ansteckender bzw. ansteckungsgefährdeter Individuen befindet, kann das System aus erfindungsgemäßem Aerosolsammler und Analysevorrichtung daher zur zeitnahen Erkennung von Infektionsrisiken genutzt werden.

Die im System enthaltene Analysevorrichtung kann ein Gerät sein, welches ein Verfahren zur Vervielfältigung von Nukleinsäuren durchführt, hierin auch als NAAT-Gerät bezeichnet. Das NAAT-Gerät ist bevorzugt ein RT-PCR-Gerät oder ein PCR-Gerät, bevorzugter ein Gerät zur isothermen Nukleinsäureamplifikation, noch bevorzugter ein RT-LAMP-Gerät, wobei NAAT für *"Nucleic Acid Amplification Technology",* RT-PCR für*"reverse transcription polymerase chain reaction"* und RT-LAMP für *"reverse transcription loop-mediated isothermal amplification"* steht. Das NAAT-Gerät ist ebenfalls bevorzugt ein Droplet-PCR-Gerät.

Das NAAT-Gerät kann ein Gerät zur Durchführung einer hochsensitiven Nukleinsäureamplifikation sein. Unter einer hochsensitiven Nukleinsäureamplifikation soll in der vorliegenden Anmeldung eine Nukleinsäureamplifikation verstanden werden, bei der auch ausgehend von einer sehr geringen Menge DNA oder RNA, beispielsweise 3 Kopien/Probe, eine Amplifikation der Nukleinsäuren und damit der Nachweis eines Pathogens möglich ist.

Die grundsätzliche Funktionsweise der verschiedenen Nukleinsäureamplifikations-Geräte (NAAT-Geräte) und -Verfahren ist dem Fachmann bekannt und braucht daher an dieser Stelle nicht im Detail erörtert zu werden.

Die isotherme Nukleinsäureamplifikation bietet gegenüber konventioneller RT-PCR allgemein den Vorteil, dass sie keine Temperaturzyklen durchlaufen muss, sondern bei einer konstanten Temperatur (z.B. 60°C) abläuft. Dadurch verringern sich gegenüber herkömmlichen RT-PCR-Geräten der apparative Aufwand und die Kosten, weil auf einen Thermocycler, also ein Gerät, das selbstständig Temperaturzyklen durchführen kann, verzichtet werden kann. Stattdessen lässt sich das Erwärmen auf die benötigte, konstante Temperatur durch sehr einfache Mittel wie einen Heizblock oder ein Wasserbad bewerkstelligen.

Neben den zuvor genannten Vorzügen, d.h. dem niedrigeren Preis und den einfacheren Gerätschaften, bestehen zusätzliche spezifische Vorteile der isothermen RT-LAMP-Amplifikation im Vergleich zu herkömmlichen Techniken wie RT-PCR in der schnelleren Durchführbarkeit, der einfacheren Benutzung, und der Möglichkeit, nicht vorbehandeltes Probenmaterial zu untersuchen. Ein Auslesen der Ergebnisse kann für alle NAAT-Verfahren beispielsweise durch Detektion von Fluoreszenz oder durch einen Farbumschlag erfolgen, der sich mit bloßem Auge erkennen, aber auch kolorimetrisch durch Sensoren verfolgen und somit automatisieren lässt. Beispielsweise kann in der Reaktionsmischung eine Genschere (CRISPR) enthalten sein, welche bei Vorliegen einer Pathogen-spezifischen Sequenz diese schneidet und ein Fluoreszenz-Signal erzeugt.

Kits für die isotherme RT-LAMP-Analyse von Nukleinsäure-haltigen Proben sind kommerziell erhältlich. Zum spezifischen Nachweis des RNA-Erbgutes von SARS-CoV-2-Viren werden auf dem Markt derzeit mehrere RT-LAMP-Kits angeboten, beispielsweise von der Firma RayBiotech, Inc. (USA) unter dem Namen "COVID-19 Rapid Isothermal PCR Kit", von der Firma New England Biolabs, Inc. (USA) unter dem Namen "SARS-CoV-2 Rapid Colorimetric LAMP Assay Kit" oder von der Firma Seasun Biomaterials, Inc. (Südkorea) unter dem Namen "AQ-TOP COVID-19 Rapid series".

Bevorzugt ist zumindest eine Komponente der Analysevorrichtung austauschbar. Dies kann die Zufuhr frischer Reagenzien, die zum Erregernachweis benötigt werden, erleichtern. Die austauschbare Komponente kann beispielsweise ein Mikroreaktionsgefäß sein, in welchem eine Reaktionsmischung für eine Nachweisreaktion, z.B. mittels eines NAAT-Verfahrens, wie hierin genannt, erfolgen kann. Das Mikroreaktionsgefäß kann gleichzeitig als Auffangvorrichtung des Aerosolsammlers dienen, wobei es auch mit einer separaten Auffangvorrichtung einsetzbar ist. Ebenfalls kann die Analysevorrichtung als Teststreifen ausgebildet sein, welcher vollständig austauschbar ist und beispielsweise in eine Halterung auf der Kondensationsfläche eingeführt werden kann, sodass sich das Kondensat unmittelbar auf dem Teststreifen ansammelt und/oder darauf fliest.

Die Überführung des Kondensats aus der Auffangvorrichtung in die Analysevorrichtung kann manuell, beispielsweise durch Pipettieren, erfolgen oder indem das Kondensat von der Auffangvorrichtung oder direkt von der Kondensationsfläche in ein Reaktionsgefäß der Analysevorrichtung tropft.

Die Auffangvorrichtung kann einen Auslass aufweisen, der mit einem Einlass der Analysevorrichtung verbindbar ist, wobei vorzugsweise zumindest der Auslass der Auffangvorrichtung verschließbar ist. Dadurch ist der Eintritt des Kondensats in die Analysevorrichtung regelbar und ohne manuelle Eingriffe, z.B. allein durch Einwirkung der Schwerkraft, möglich.

Die mindestens eine Analysevorrichtung kann mit mindestens einem Aerosolsammler in einer baulichen Einheit kombiniert sein. Gemäß einer anderen Variante kann eine Analysevorrichtung von mehreren Aerosolsammlern Kondensat untersuchen, wobei die Aerosolsammler von der Analysevorrichtung getrennt sind. Dies erlaubt es, mehrere Aerosolsammler in verschiedenen Räumen aufzustellen und Proben des gesammelten Kondensats von einer Analysevorrichtung analysieren zu lassen.

In einer bevorzugten Ausführungsform kann sich mindestens eine Auffangvorrichtung innerhalb der Analysevorrichtung befinden. Die mindestens eine Auffangvorrichtung kann dabei vorteilhafterweise als Mikroreaktionsgefäß für kleine Probenvolumina im Mikroliterbereich ausgebildet sein, so dass der Nachweis des Erregers, der bevorzugt durch Nukleinsäureamplifikation erfolgt, direkt in der Auffangvorrichtung durchführbar ist.

Das System kann einen Sensor umfassen, durch den zumindest positive Testergebnisse, bevorzugt positive und negative Testergebnisse erkennbar sind. Bevorzugter ist durch den Sensor ein Fluoreszenz-Signal oder eine Extinktion bei zumindest einer Wellenlänge detektierbar.

In einer bevorzugten Ausführungsform umfasst das System einen Sensor, durch den zumindest positive Testergebnisse erkennbar sind, und mindestens eine mit dem Sensor verbundene Warnvorrichtung, durch die zumindest bei Vorliegen eines positiven Testergebnisses mindestens ein Signal erzeugbar ist. Besonders bevorzugt ist der Sensor mit mehreren Warnvorrichtungen verbunden, durch die gleichzeitig mehrere Signale erzeugbar sind. Die Warnvorrichtung kann eine Vorrichtung zur Erzeugung eines optischen Signals, eines akustischen Signals, und/oder eines elektronischen Signals sein. Die Warnvorrichtung zur Erzeugung eines optischen Signals kann ein oder mehrere Anzeigen und/oder ein oder mehrere LED-Leuchtmittel umfassen. Die Warnvorrichtung zur Erzeugung eines akustischen Signals kann einen oder mehrere Lautsprecher umfassen. Die Warnvorrichtung zur Erzeugung eines elektronischen Signals kann eine Vorrichtung zum Versenden elektronischer Mitteilungen, beispielsweise von Kurzmitteilungen (SMS) oder E-Mails an im System gespeicherte Telefonnummern oder E-Mail-Adressen, umfassen.

Das System kann ein Netzteil für den Anschluss an das Stromnetz oder eine Batterie umfassen.

Die Erfindung wird nachfolgend anhand von Ausführungsbeispielen und nicht zur Erfindung gehörenden Beispielen unter Bezugnahme auf die Zeichnungen näher beschrieben; in diesen zeigen schematisch:
- Fig. 1: einen Aerosolsammler
- Fig. 2: ein System mit Aerosolsammler und Analysevorrichtung,
- Fig. 3a: eine Kühlvorrichtung,
- Fig. 3b: eine weitere Kühlvorrichtung
- Fig. 4: eine Ausführungsform eines Aerosolsammlers eines erfindungsgemäßen Systems
- Fig. 5a: eine Aufsicht auf einen Aerosolsammler, und
- Fig. 5b: eine Seitenansicht des Aerosolsammlers von Fig. 5a.
- Fig. 6: eine Ausführungsform einer Kühlvorrichtung mit einem Vibrationselement.
- Fig. 7: ein System mit Aerosolsammler und Analysevorrichtung.
- Fig. 8: noch ein System mit Aerosolsammler und Analysevorrichtung.
- Fig. 9: Aufsicht auf ein erfindungsgemäßes System.
- Fig. 10: eine Seitenansicht des Systems gemäß Fig. 9.
- Fig. 11a: einen weiteren, nicht zur Erfindung gehörenden Aerosolsammler.
- Fig. 11b: den Aerosolsammler gemäß Fig. 11a, mit eingesetzter Auffangvorrichtung.
- Fig. 12a: eine Aufsicht auf eine Ausführungsform eines Aerosolsammlers mit Analysevorrichtung.
- Fig. 12b: eine Seitenansicht des Aerosolsammlers gemäß Fig. 12a.

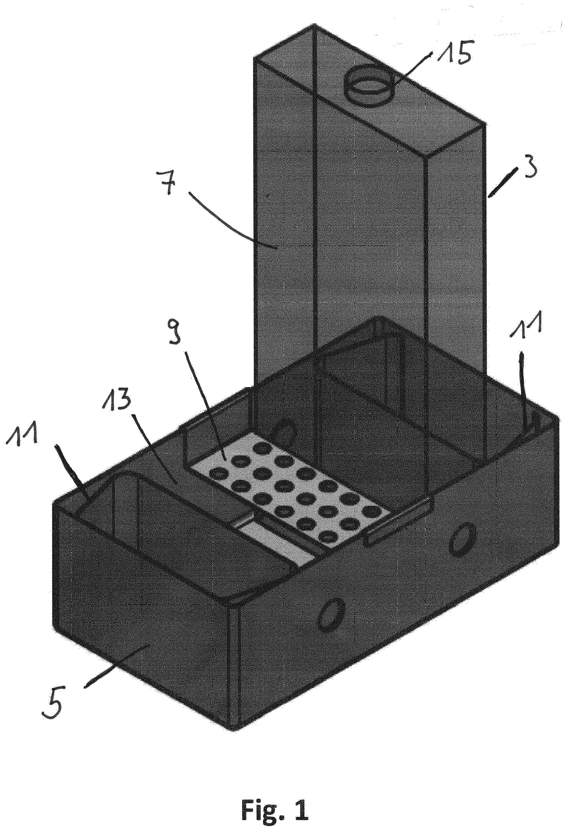

In Fig. 1 ist ein Aerosolsammler 1 schematisch gezeigt, welcher von einer zu untersuchenden Luft 2 umgeben ist und der eine quaderförmige Kühlvorrichtung 3 umfasst. Diese kann innen hohl und mit Wasser gefüllt oder massiv sein. Die Kühlvorrichtung 3 ist in austauschbarer Weise in einer wannenförmigen Auffangvorrichtung 5 angeordnet, welche aus Metall oder einem Polymermaterial sein kann. Die Kondensationsfläche 7 der Kühlvorrichtung 3 besteht aus einem glatten Material, welches keine Poren aufweist. An der Kondensationsfläche 7 gebildetes Kondensat (nicht dargestellt) sammelt sich unter dem Einfluss der Schwerkraft in der wannenförmigen Auffangvorrichtung 5 und kann daraus entnommen und analysiert werden, wobei hierfür bereits wenige Mikroliter Kondensat ausreichend sind. Ein in der Auffangvorrichtung 5 angebrachtes Blech 9 dient als Stütze für die Kühlvorrichtung 2 und ist als Lochblech ausgebildet, um den Durchtritt von Kondensat zu ermöglichen. Zur Fixierung der Kühlvorrichtung 3 sind zwei Klemmfedern 11 vorgesehen, wovon eine die in Fig. 1 gezeigte Kühlvorrichtung 2 gegen das Blech 9 presst. In Fig. 1 ist nur eine Kühlvorrichtung 2 in der Auffangvorrichtung 5 angeordnet, wobei in einem freien Slot 13 eine weitere nicht gezeigte Kühlvorrichtung eingesetzt werden kann, die im eingesetzten Zustand ebenfalls von einer Klemmfeder 11 gegen das Blech 9 fixiert wird.

Die in Fig. 1 gezeigte Kühlvorrichtung 3 ist an ihrer Oberseite mit einem Einlass 15 versehen, in welchen ein nicht dargestelltes Kühlmedium, z.B. Wasser, eingefüllt werden kann. Vor Verwendung wird die befüllte Kühlvorrichtung 3 beispielsweise in einem Kühlschrank oder einem Gefrierfach abgekühlt und anschließend in einem Slot 13 angeordnet und durch eine Klemmfeder 11 fixiert werden. Prinzipiell ist jede äußere Oberfläche der Kühlvorrichtung 3 eine Kondensationsfläche 7. Alternativ kann die nicht mit einem Kühlmedium gefüllte Kühlvorrichtung 3 auch dann mit kaltem Kühlmedium befüllt werden, um ein Kondensieren von Luftfeuchtigkeit an der Kondensationsfläche 7 zu starten, wenn sie bereits in einem Slot 13 eingesetzt ist.

Die Leistungsfähigkeit des in Fig. 1 gezeigten Aerosolsammlers 1 ist anhand des folgenden Beispiels gezeigt. In der Wohnung eines COVID-19-Patienten wurde ein Aerosolsammler 1 nach Fig. 1 an drei aufeinanderfolgenden Tagen in verschiedenen Räumen platziert. Aus dem über jeweils 6 Stunden aus der Raumluft gewonnenen Kondensat (> 10 ml) wurden anschließend Proben von je 50 µl entnommen und mittels einer quantitativen RT-PCR nach WHO-Standard mit einem LOD (limit of detection) von < 3 Kopien/PCR auf das Vorhandensein von SARS-CoV-2-RNA untersucht. Dabei wurden die in Tabelle 1 gezeigten Viruslasten ermittelt.

**Tabelle 1**

| Nr. | Tag | Ort/Zeit | Aufenthalt* | Lüftung** | Kopien/µl | Kopien/ml |
|---|---|---|---|---|---|---|
| 1 | 1 | Küche Ab. | ++ | ++ | 12 | 12.000 |
| 2 | 2 | Küche Nm. | + | ++ | <2 | <2.000 |
| 3 | 2 | TV-Zimmer Nm. | - | - | 100 | 100.000 |
| 4 | 2 | Schlafzimmer Nacht | - | - | 60 | 60.000 |
| 5 | 2 | Wohnzimmer Ab. | ++ | + | 13 | 13.000 |
| 6 | 3 | TV-Zimmer Nm./Ab. | - | + | 10 | 10.000 |
| 7 | 3 | Wohnzimmer Nm./Ab. | ++ | + | 29 | 29.000 |
| 8 | 3 | Küche Nm./Ab. | + | ++ | 9 | 9.000 |
| 9 | A1 | Externer Standard | | | 200 | 200.000 |
| 10 | W | Negativ-Probe | | | 0 | 0 |

| | | | | | | |
|---|---|---|---|---|---|---|
| * Aufenthaltsdauer des COVID-19-Patienten im Raum: ++ = >2 Stunden, + = 1-2 Stunden, _ = keine Aufenthalt oder <1 Stunde ** Lüftungshäufigkeit im Raum: ++ = häufiges Lüften, + = gelegentliches Lüften, _ = kein Lüften Nm.: Nachmittags, Ab.: Abends | | | | | | |

Wie aus Tabelle 1 ersichtlich ist, konnte mit Hilfe des erfindungsgemäßen Aerosolsammlers 1 nach Fig. 1 überraschenderweise gezeigt werden, dass zur Vermeidung von Ansteckungen häufige Lüftung auch bei vermeintlich "nicht kontaminierten" Räumen nötig ist, da SARS-CoV-2 im Aerosol auch in >5 Metern Entfernung vom Patienten noch nachweisbar war. Ferner war es überraschend möglich, das aus der Raumluft gewonnene Kondensat ohne weitere Aufbereitung der Virus RNA einer RT-LAMP-Analyse zu unterziehen.

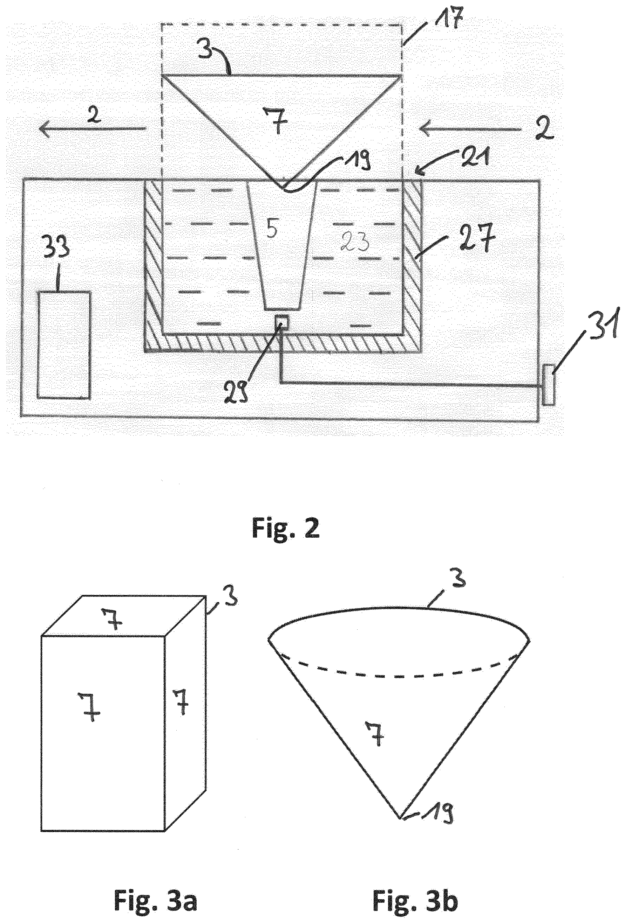

In Fig. 2 ist eine Querschnittsansicht eines Systems dargestellt. Das System nach Fig. 2 umfasst eine von der zu untersuchenden Luft 2 angeströmte, von einem Gitter 17 abgedeckte Kühlvorrichtung 3, die kegelförmig ausgebildet ist, wobei die Spitze 19 des Kegels 3 auf die Auffangvorrichtung 5 weist. Die Kühlvorrichtung 3 kann als austauschbare Einheit ausgebildet sein. Die Kondensationsfläche 7 der Kühlvorrichtung 10 besteht aus Metall und ist oberhalb der als RT-LAMP-Gerät ausgebildeten Analysevorrichtung 21 angeordnet, so dass auf der Kondensationsfläche 3 gebildetes Kondensat 4 durch Einwirkung der Schwerkraft in Richtung der Analysevorrichtung 21 befördert wird. Die Analysevorrichtung 21 weist vorzugsweise ebenfalls eine austauschbare Einheit auf. Vorzugsweise werden die Kühlvorrichtung 3 und die austauschbare Einheit der Analysevorrichtung 21 vor Beginn des Sammelvorgangs bei -20°C aufbewahrt. Nach dem Zusammenfügen der beiden Einheiten sammelt sich typischerweise innerhalb von 10 Minuten eine für den RT-LAMP-Nachweis ausreichende Menge an Kondensat (50 µl). Die Auffangvorrichtung 5 ist als Mikroreaktionsgefäß ausgebildet und befindet sich in der Analysevorrichtung 11.

Das Mikroreaktionsgefäß enthält eine fertige wässrige Lösung der nötigen Bestandteile (Primer, reverse Transkriptase, DNA-Polymerase, Farbstoff etc.) zum kolorimetrischen Nachweis der RNA von SARS-Cov-2-Viren, welche in Fig. 2 nicht dargestellt ist. Das Kondensat gelangt direkt und ohne Vorbehandlung in das Mikroreaktionsgefäß 5, welches die Auffangvorrichtung 5 darstellt. Die Auffangvorrichtung 5 kann bei dieser Ausführungsform die austauschbare Einheit der Analysevorrichtung 21 sein. Die Analysevorrichtung 21 enthält ferner ein Wasserbad 23, über welches der Inhalt des Mikroreaktionsgefäßes 5 auf eine konstante Temperatur erwärmt werden kann, und eine Heizung 27 zum Aufheizen des Wasserbades 23 auf die gewünschte Temperatur. Um die RT-LAMP-Reaktion in Gang zu bringen, kann die Auffangvorrichtung 5 mit Hilfe der Heizung 27 erwärmt werden, z.B. für 30 Minuten auf 60°C.

Das System enthält zudem einen Sensor 29, z.B. ein optischer Sensor. Dieser ist geeignet zur Messung der Extinktion des Inhalts des Mikroreaktionsgefäßes 5 bei einer festgelegten Wellenlänge, die bei dem im RT-LAMP-Reagenz enthaltenen Farbstoff das Vorliegen von SARS-CoV-2-RNA anzeigt. Der Sensor 29 kann ein Signal abgeben, sodass bei Vorliegen einer SARS-CoV-2-RNA auf einer Anzeige 31, die als Warnvorrichtung zur Erzeugung eines optischen Signals dient, eine Warnung erfolgt. Die Anzeige 31 kann zum Beispiel durch ein Leuchtmittel ein optisches Signal erzeugen, dass die anwesenden Personen warnt. Ferner enthält das System eine Batterie 33 zur Stromversorgung der Heizung 27, des Sensors 26 und der Anzeige 31.

In Fig. 3a und 3b sind Ausgestaltungen einer Kühlvorrichtung 3 gezeigt. In Fig. 3a ist die Kühlvorrichtung 3 quaderförmig und in Fig. 3b in Form eines Kegels ausgeführt. Bei der in Fig. 3a gezeigten Ausgestaltung ist jede äußere Oberfläche des Quaders eine Kondensationsfläche 7, an welcher Luftfeuchtigkeit auskondensieren kann. Bei der kegelförmigen Ausgestaltung in Fig. 3b ist die Mantelfläche des Kegels die Kondensationsfläche 7. An der Kondensationsfläche 7 auskondensierte Luftfeuchtigkeit kann zu einer Spitze 19 laufen, sich dort sammeln und von dort abtropfen, sodass die Spitze 19 als ein Abtropfzapfen wirkt. Bei den in den Fig. 3a und 3b gezeigten Kühlvorrichtungen 3 ist die Kühlvorrichtung ohne Einlassöffnung für ein Kühlmedium ausgestaltet, stattdessen sind die Kühlvorrichtungen 3 aus einem massiven Material gefertigt. Vor Verwendung werden die Kühlvorrichtungen abgekühlt und dann mit einer Auffangvorrichtung zu einem Aerosolsammler zusammengefügt.

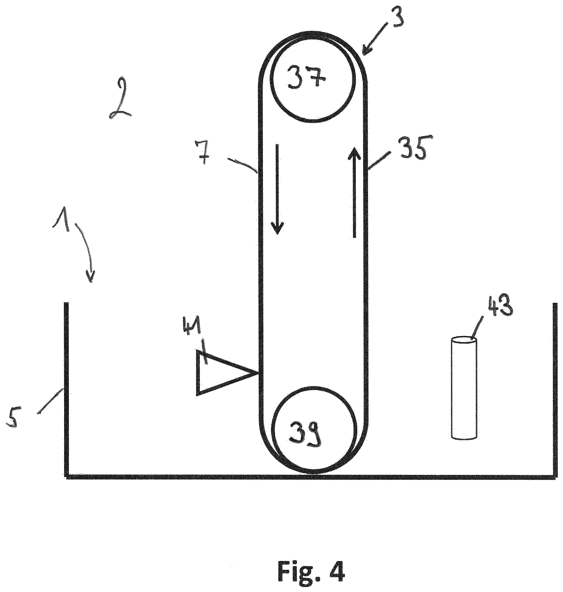

Eine Ausführungsform eines Aerosolsammlers 1 welcher Luftfeuchtigkeit aus der Luft 2 an einem gekühlten Metallband 35 abscheidet, ist schematisch in Fig. 4 gezeigt. Das Metallband 35 stellt zusammen mit zwei Rollen 37, 39, um welche es geführt ist, eine Kühlvorrichtung 3 dar, mit einer Kondensationsfläche 7. Beim Umlauf um die Rollen 37 und 39 wird das Metallband 35 an einem Abstreifer 41 vorbeigeführt, an welchem ein sich abgeschiedenes Kondensat (nicht dargestellt), abgestreift wird. Die Umlaufrichtung des Metallbandes 35 ist in Fig. 4 durch zwei Pfeile angedeutet. Zur Desinfektion ist der Aerosolsammler 1 mit einer UV-Lampe 43 versehen, welche bei Bedarf eine infizierende Wirkung vorhandener Pathogenen (nicht dargestellt) eliminieren kann. Die Kühlung des Metallbandes 35 kann beispielsweise über die Rolle 37 und/oder 38 erfolgen.

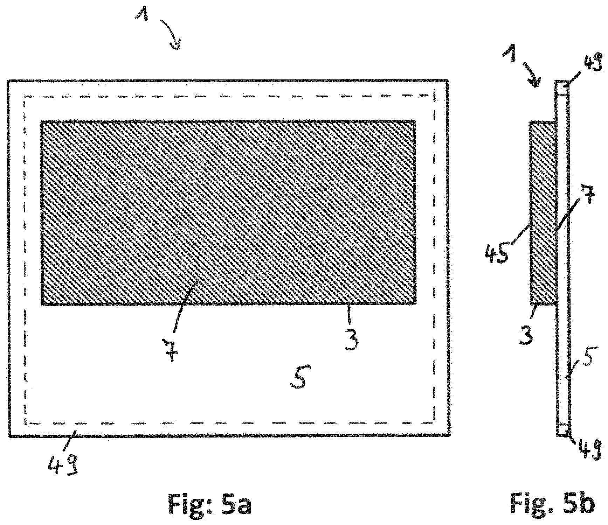

Die schematischen Darstellungen von Fig. 5a und 5b zeigen einen weiteren Aerosolsammler 1, wobei Fig. 5a eine Aufsicht und Fig. 5b eine Seitenansicht darstellt. Die Kühlvorrichtung 3 ist als Peltier-Element ausgeführt, wobei eine Kondensationsfläche 7 der Kühlvorrichtung 3 von einer Auffangvorrichtung 5 bedeckt ist. Die Auffangvorrichtung 5 ist in Form einer Folie ausgeführt und steht im flächigen Kontakt mit der Kondensationsfläche 7. Beim Abkühlen der Kondensationsfläche 7 des Peltier-Elements bildet sich Kondensat (nicht gezeigt) direkt auf der Folie, d.h. auf der Auffangvorrichtung 5. Vorzugsweise ist der Aerosolsammler 1 mit einem Lüfter ausgestattet (nicht gezeigt), welcher die warme Seite 45 (nur in Fig. 5b zu erkennen) des Peltier-Elements kühlen kann. In einem Randbereich 49 der Folie, d.h. der Auffangvorrichtung 5) kann ein Verschlussmittel (nicht dargestellt), z.B. in Form eines Klebestoffs, vorgesehen sein, mit welchem die Folie nach der Sammlung von Kondensat verschließbar ist. Die Folie lässt sich von der Kühlvorrichtung 3 ablösen, sodass nach Kondensatsamlung die Folie verschlossen und/oder zusammengerollt werden kann und dann beispielsweise in einem passenden Gefäß, z.B. ein Röhrchen, (nicht dargestellt) sicher transportiert werden kann.

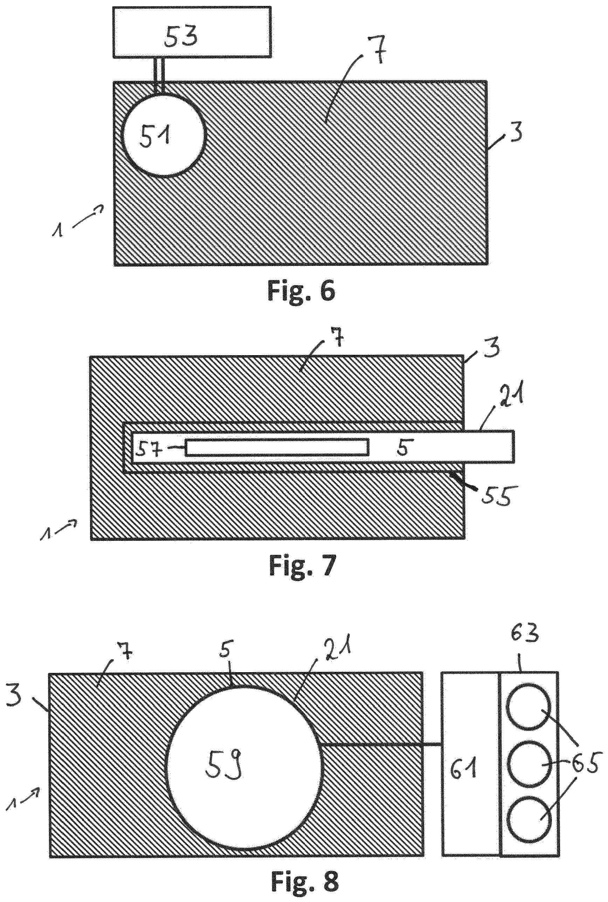

In Fig. 6 ist eine als Peltier-Element ausgeführte Kühlvorrichtung 3 dargestellt, an deren Kondensationsfläche 7 ein Piezoelement 51 angeordnet ist. Das Piezoelement 51 ist mit einem Frequenzgenerator 53 verbunden, welcher das Piezoelement 51 in Vibration versetzen kann. Durch die Vibration des Piezoelements 51 wird das Abtropfen von Kondensattropfen (nicht dargestellt) unterstützt.

Fig. 7 zeigt schematisch ein System mit einem Aerosolsammler 1 mit einer Kühlvorrichtung 3 in Form eines Peltier-Elements und einer Auffangvorrichtung 5, sowie einer Analysevorrichtung 21. Die Analysevorrichtung 21 ist als Teststreifen ausgeführt und in eine Halterung 55 eingeführt. Der Teststreifen ist auf der Kondensationsfäche 7 angeordnet, so dass sich Kondensat (nicht dargestellt) unmittelbar auf dem Teststreifen bilden kann, aber auch von der Kondensationsfläche 7 auf den Testtreifen fließen kann. In einem Analyseabschnitt 57 des Teststreifens findet bei Vorliegen eines Pathogens, z.B. SARS-CoV-2, eine spezifische detektierbare Reaktion statt. Der Teststreifen ist austauschbar.

Ein weiteres System mit einem Aerosolsammler 1 mit einer Kühlvorrichtung 3 in Form eines Peltier-Elements und einer Auffangvorrichtung 5, sowie einer Analysevorrichtung 21 ist in Fig. 8 schematisch dargestellt. Die Auffangvorrichtung 5 ist in Form eines Sensors 59 auf der Kondensationsfläche 7 angeordnet. Der Sensor 59 ist die Auffangvorrichtung 5 sowie ein Bestandteil der Analysevorrichtung 21. Kondensat (nicht dargestellt), welches sich auf dem Sensor 59 niederschlägt bzw. darauf fließt, wird auf ein Pathogen analysiert. Abhängig vom Vorliegen eines Pathogens gibt der Sensor ein Signal an eine Auswerteinheit 61 mit einer Auswertelektronik, welche das Messergebnis des Sensors 59 auf einer Anzeige 63 darstellt. Die in Fig. 8 gezeigte Anzeige 63 weist drei Signale 65 auf, wovon ein erstes Signal 65 das Vorliegen eines Pathogens anzeigt, ein zweites Signal 65 das Nichtvorliegen eines Pathogens anzeigt und ein drittes Signal 65 die Funktionsfähigkeit des Systems anzeigt.

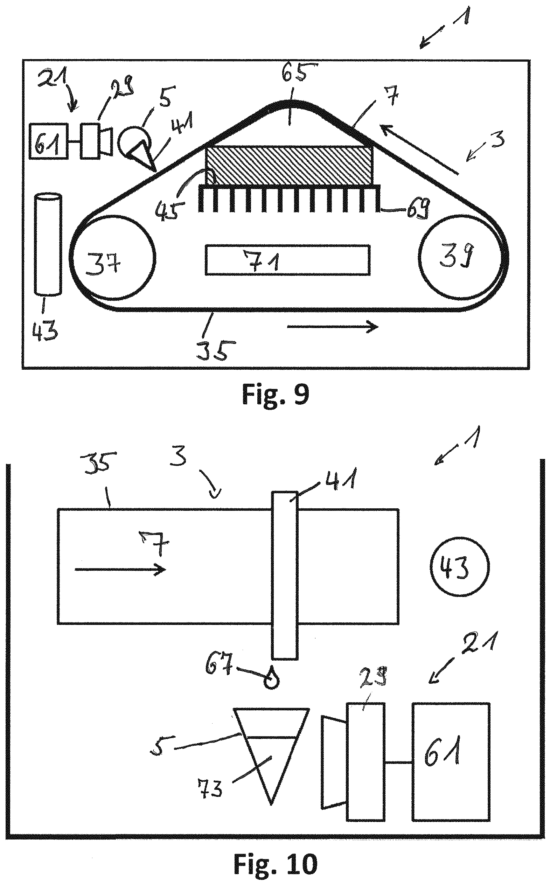

In Fig. 9 ist eine schematische Aufsicht und in Fig. 10 eine schematische Seitenansicht einer Ausführungsform eines Aerosolsammlers 1 gezeigt. Die Kühlvorrichtung 3 weist ein schraffiert dargestelltes Peltier-Element auf, an dessen kalter Seite ein Metallblock 65 vorgesehen ist, über welchen ein Metallband 35 geführt ist. Das Metallband 35 ist von Rollen (37, 39) in Richtung der in den Fig. 9 und 10 eingezeichneten Pfeilen angetrieben, sodass es sich über den an dem Peltier-Element angebrachten Metallblock 65 bewegt und dabei abgekühlt wird, sodass Luftfeuchtigkeit an dem Metallband 35 auskondensieren kann, d.h. das Metallband ist die Kondensationsfläche 7. Das Metallband 35 kann hierbei kontinuierlich in Bewegung sein oder diskontinuierlich, d.h. es verweilt eine Zeitspanne, bis sich Kondensat auf der mit dem Metallblock 65 in Kontakt stehenden Oberfläche, d.h. der Kondensationsfläche 7, Kondensat gebildet hat. Die Bewegung des Metallbandes kann von einer Steuerungseinheit (nicht dargestellt) gesteuert werden. In Bewegungsrichtung des Metallbandes dem Metallblock folgend ist ein Abstreifer 41 vorgesehen, welcher ein sich auf dem Metallband 35 gebildetes Kondensat (nicht dargestellt) abstreift, sodass dieses in eine Auffangvorrichtung 5 tropft. Ein abtropfender Kondensatstropfen 67 ist schematisch in Fig. 10 dargestellt. Dem Abstreifer 41 in Bewegungsrichtung des Metallbandes 35 folgend, ist ein Desinfektionsmittel in Form einer UV-C Lampe 43 angeordnet, mit welcher sich gegebenenfalls noch nach dem Abstreifen auf dem Metallband 35 befindliche Pathogene neutralisieren lassen. Das Peltier-Element weist auf der warmen Seite 45 einen Wärmetauscher 69 auf. Ein Lüfter 71 ist auf diesen Wärmetauscher 69 gerichtet, sodass Wärme von der warmen Seite 45 des Peltier-Elements abgeführt werden kann. Peltier-Element, Metallblock 65, Wärmetauscher 69, Lüfter 71 und Rollen 37, 39 sind aus Gründen der Übersichtlichkeit lediglich in Fig. 9 dargestellt.

Wie insbesondere anhand von Fig. 10 zu erkennen ist, ist die Auffangvorrichtung 5 als Mikroreaktionsgefäß ausgestaltet, welche auch als Eppendorf-Gefäß oder Eppi bezeichnet werden. Der durch den Abstreifer 41 von dem Metallband 35, d.h. der Kondensationsfläche 7, abgestreifte Kondensatstropfen 67 fällt in das Mikroreaktionsgefäß 5. In dem Mirkoreaktionsgefäß 5 kann, wie in Fig. 10 dargestellt, eine Reaktionslösung 73 zur Durchführung einer NAAT-Analyse, insbesondere einer RT-PCR-Analyse oder einer RT-LAMP-Analyse vorgelegt sein. Sofern der Kondensatstropfen 67 ein Pathogen aufweist, kann dieses durch die NAAT-Analyse nachgewiesen werden, wobei sich ein Pathogennachweis z.B. in Form einer Fabänderung der Reaktionslösung ausdrückt. Prinzipiell ist auch denkbar, dass das Pathogen durch einen Teststreifen nachgewiesen wird, der bei Gegenwart des Pathogens z.B. eine Farbänderung bzw. eine Färbung zeigt. Die Gegenwart eines Pathogens kann so durch einen Sensor, z.B. in Form eines CCD-Chips einer Kamera, detektiert werden. Die Signale des Sensors werden von einer Auswerteeinheit 61 ausgewertet, welche bei Detektion des Pathogens eine vorbestimmte Aktion ausführen kann, z.B. Erzeugen einer Warnung. Auffangvorrichtung 5, Sensor 29 und Auswerteeinheit 61 sind bei der in den Fig. 9 und 10 gezeigten Ausführungsform die Analysevorrichtung 21.

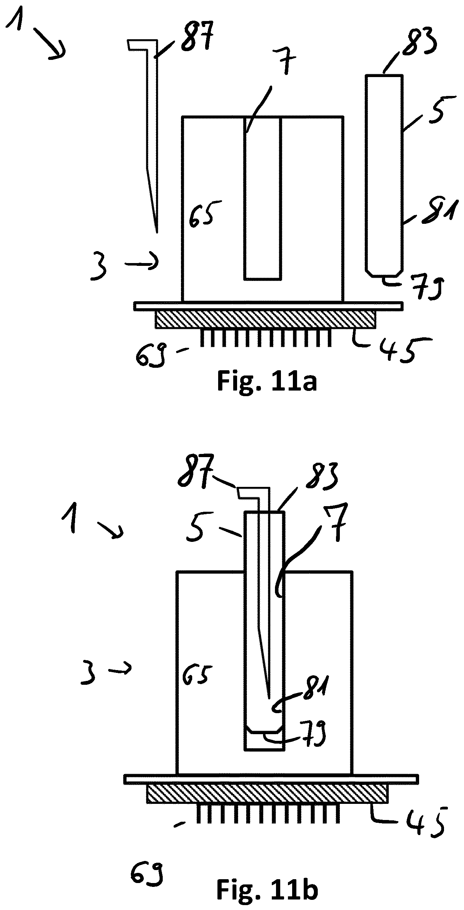

Bei dem in den Fig. 11a und 11b gezeigten nicht zur Erfindung gehörenden Beispiel weist der Aerosolsammler 1 eine Kühlvorrichtung 3 und eine Auffangvorrichtung 5 auf. Die Kühlvorrichtung 3 ist mit einem Peltier-Element ausgestattet, welches eine warme Seite 45 aufweist, auf welcher ein Kühler 69 angebrachte ist. An der Kalten Seite der Kühlvorrichtung ist ein Metallblock 65 vorgesehen. In dem Metallblock 65 ist eine Aufnahme 75 vorgesehen, in welche die Auffangvorrichtung 5 eingesetzt werden kann, wie in Fig. 11b gezeigt. Die Auffangvorrichtung 5 weist einen Boden 79 sowie eine Seitenwand 81 auf, wobei im eingesetzten Zustand zumindest die Seitenwand 81 in Kontakt mit der Kühlfläche 7 steht, sodass an einer inneren Oberfläche der Auffangvorrichtung 5 Luftfeuchtigkeit auskondensieren kann. Die zu untersuchende Luft kann durch die Öffnung 83 in die Auffangvorrichtung gelangen, entweder durch natürliche Konvektion oder unterstützt durch eine Anströmvorrichtung, wie der Lufteinleitung 87. Die Lufteinleitung 87 umfasst ein Rohr, welches aus der Auffangvorrichtung entnommen sein kann, wie in Fig. 11a gezeigt, oder in die Auffangvorrichtung eingeführt sein kann, wie in Fig. 11b dargestellt. Die Lufteinleitung 87 kann ferner einen Ventilator umfassen (nicht dargestellt) der Luft in das Rohr der Lufteinleitung 87 einbläst und damit der gekühlten Innenfläche 7 der Auffangvorrichtung 5 zuführt. Nachdem Kondensat gesammelt wurde, kann die Auffangvorrichtung 5 aus der Aufnahme 75 entnommen werden (wie in Fig. 11a gezeigt) und das aufgefangene Kondensat einer Analyse unterzogen werden. In die Aufnahme kann nach Entnahme der Auffangvorrichtung eine neue Auffangvorrichtung eingesetzt werden, um die Luft weiterhin auf Pathogene zu untersuchen.

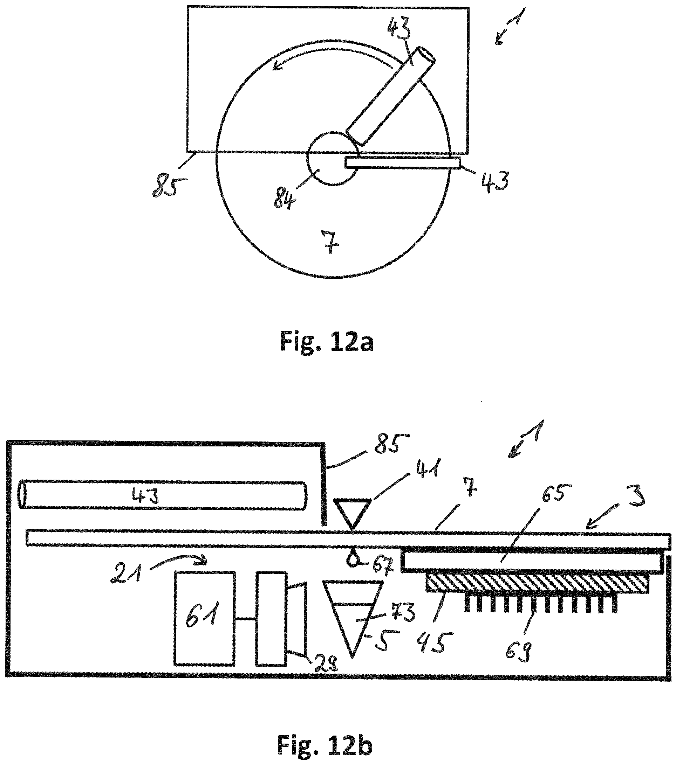

Bei der in den Fig. 12a und 12b gezeigten Ausführungsform ist die Kondensationsfläche 7 in Form einer runden, rotierbaren, d.h. beweglichen, Scheibe. Dier in Fig. 12a gezeigte Pfeil deutet die Rotationsrichtung an. Ein Antriebsmittel, um die Kondensationsfläche 7 in Rotation zu versetzen ist zur besseren Übersicht in den Fig. 12a und 12b nicht dargestellt. Die Analysevorrichtung 21 und die elektrische Kühlung sind lediglich in Fig. 12b dargestellt. Die rotierende Scheibe kann beispielsweise aus Glas sein. Auf der Oberfläche der Kondensationsfläche 7 ist ein Abstreifer 41 vorgesehen, der Kondensat, das sich auf der Scheibenoberfläche gesammelt hat, abstreift, sodass Kondensatstropfen 67 aufgefangen werden können und einer Analysevorrichtung 21 zugeführt werden können. Wie in Fig. 12b gezeigt, kann die Auffangvorrichtung unterhalb der rotierbaren Scheibe, d.h. der Kondensationsfläche 7, angeordnet sein, welche im Bereich Ihres Mittelpunkts Durchlass 84 aufweist (lediglich in Fig. 12a zu sehen), durch welche ein Kondensatstropfen 67 in die Analysevorrichtung 21 tropfen kann. Die Analysevorrichtung 21 entspricht der in den Fig.9 und 10 gezeigten Analysevorrichtung, wobei gleiche Bezugszeichen gleiche oder ähnliche Komponenten bedeuten. Eine UV-Lampe 43 ist zur Desinfektion der Glasscheibe vorgesehen und kann zum Schutz anwesender Personen durch eine Abdeckung 85, z.B. eine Haube oder ein Gehäuse, von der Umgebung abgeschirmt sein, welche in Fig. 12a aus illustrativen Gründen transparent dargestellt ist. Ein Peltier-Element (lediglich in Fig. 12a dargestellt) weist auf der warmen Seite 45 einen Wärmetauscher 69 auf, der mit einem Lüfter (nicht dargestellt) gekühlt werden kann.

### Bezugszeichenliste

- 1: Aerosolsammler
- 2: Luft
- 3: Kühlvorrichtung
- 5: Auffangvorrichtung
- 7: Kondensationsfläche
- 9: Blech
- 11: Klemmfeder
- 13: Slot
- 15: Einlass
- 17: Gitter
- 19: Spitze
- 21: Analysevorrichtung
- 23: Wasserbad
- 29: Sensor
- 31: Anzeige
- 33: Batterie
- 35: Metallband
- 37: Rolle
- 39: Rolle
- 41: Abstreifer
- 43: UV-Lampe
- 45: warme Seite
- 49: Randbereich
- 51: Piezoelement
- 53: Frequenzgenerator
- 55: Halterung
- 57: Analyseabschnitt
- 59: Sensor
- 61: Auswerteeinheit
- 63: Anzeige
- 65: Metallblock
- 67: Kondensatstropfen
- 69: Wärmetauscher
- 71: Lüfter
- 73: Reaktionslösung
- 75: Aufnahme
- 79: Boden
- 81: Seitenwand
- 83: Öffnung
- 84: Durchlass
- 85: Abdeckung
- 87: Lufteinleitung

## Patentansprüche

1. System, umfassend einen Aerosolsammler (1) zur Sammlung von Pathogenen aus Luft (2) und eine Analysevorrichtung (21) zur Bestimmung der Art und/oder Menge zumindest eines der gesammelten Pathogene, wobei der Aerosolsammler (1) zumindest eine Kühlvorrichtung (3) umfasst, die zumindest eine Kondensationsfläche (7) aufweist, auf dessen Oberfläche ein Kondensat gebildet werden kann, wobei die Kühlvorrichtung (3) eine elektrische Kühlung umfasst, wobei die elektrische Kühlung zumindest ein Peltier-Element umfasst,
wobei der Aerosolsammler (1) weiterhin zumindest eine Auffangvorrichtung (5) umfasst, in welcher sich das an der Kondensationsfläche (7) der Kühlvorrichtung (3) gebildete Kondensat sammelt,
**dadurch gekennzeichnet, dass** die Kondensationsfläche beweglich ausgebildet ist,
wobei der Aerosolsammler (1) eine Steuerungseinheit aufweist, welche eine Bewegung der Kondensationsfläche (7) steuert.

2. System nach Anspruch 1, wobei der Aerosolsammler (1) eine Vorrichtung zur Anströmung der Kühlvorrichtung (3), insbesondere eine warme Seite (45) des zumindest einen Peltier-Elements, mittels eines Gasstroms umfasst.

3. System nach zumindest einem der vorhergehenden Ansprüche,
wobei die Kondensationsfläche (7) bandförmig oder scheibenförmig ausgestaltet ist, insbesondere als Metallband (35), z.B. als Stahlband, insbesondere als ein umlaufendes Metallband (35), oder als Glasscheibe oder eine rotierbare Glasscheibe ausgebildet ist.

4. System nach zumindest einem der vorhergehenden Ansprüche, wobei die beweglich ausgebildete Kondensationsfläche (7) über Rollen (37, 39) geführt ist und von zumindest einer Rolle (37, 39) antreibbar ist und/oder insbesondere bei einer scheibenförmigen Kondensationsfläche um eine Achse rotierbar ist.

5. System nach zumindest einem der vorhergehenden Ansprüche, wobei der Aerosolsammler (1) ferner einen Abstreifer (41) umfasst, mit dem ein auf der Kondensationsfläche (7) gebildetes Kondensat abstreifbar ist.

6. System nach zumindest einem der vorhergehenden Ansprüche, wobei zumindest ein Teil der Auffangvorrichtung (5) austauschbar ist.

7. System nach zumindest einem der vorhergehenden Ansprüche, wobei der Aerosolsammler (1) ferner ein Desinfektionsmittel umfasst, insbesondere in Form einer UV-Lampe (43).

8. System nach zumindest einem der vorhergehenden Ansprüche, wobei die Analysevorrichtung (21) ein NAAT-Gerät ist, vorzugsweise ein PCR-Gerät oder ein LAMP-Gerät, insbesondere ein RT-LAMP-Gerät.

9. System nach zumindest einem der vorhergehenden Ansprüche, wobei zumindest eine Komponente der Analysevorrichtung (21) austauschbar ist, wobei die Komponente bevorzugt ein Mikroreaktionsgefäß ist, das weiter bevorzugt gleichzeitig die Auffangvorrichtung (5) ist.

10. System nach zumindest einem der vorhergehenden Ansprüche, wobei das System einen Sensor (29) zur Detektion zumindest eines positiven Erregernachweises umfasst.

11. System nach Anspruch 10, wobei der Sensor (29) mit mindestens einer Anzeige (31) verbunden ist, durch die zumindest bei Vorliegen eines positiven Testergebnisses mindestens ein Signal erzeugbar ist.

12. System nach Anspruch 10, wobei der Sensor (29) mit mindestens einer Auswerteeinheit (61) verbunden ist, welche ein von dem Sensor (29) erzeugtes Signal auswertet und bei Detektion eines Pathogens eine vorbestimmte Aktion auslöst, wobei die Auswerteeinheit (61) insbesondere eine Kommunikationsschnittstelle aufweist.

13. System nach zumindest einem der vorhergehenden Ansprüche, wobei der Aerosolsammler ferner ein drahtloses Kommunikationssystem, einen Controller, der einen oder mehrere Prozessoren und einen nichtflüchtiges computerlesbares Speichermedium umfasst, das Befehle zur Ausführung durch den einen oder die mehreren Prozessoren speichert, um ein Verfahren umfassend die folgenden Schritte durchzuführen:
durch die Analysevorrichtung (21) das Vorhandensein oder Fehlen eines Krankheitserregers im Aerosolkondensat nachweisen;
Veranlassen des Aerosolsammlers, ein drahtloses Kommunikationssignal durch das drahtlose Kommunikationssystem zu übertragen, wobei das drahtlose Kommunikationssignal Daten umfasst, die für die Anwesenheit oder Abwesenheit des Erregers repräsentativ sind.

14. System nach Anspruch 14, wobei das Verfahren ferner umfasst:
Empfangen eines von einem mobilen Gerät gesendeten drahtlosen Kommunikationssignals durch das drahtlose Kommunikationssystem, wobei das empfangene drahtlose Signal einen Identifikationsparameter umfasst;
Speicherung des Identifikationsparameters in dem nichtflüchtigen Speichermedium des Aerosolsammlers.

15. Verfahren, umfassend die Untersuchung eines aus Luft gewonnenen Kondensats auf Pathogene aus der Familie der Coronaviridae, wobei das Kondensat vor der Untersuchung mit einem System nach zumindest einem der vorhergehenden Ansprüche gewonnen wird.

## Claims

1. A system comprising an aerosol collector (1) for collecting pathogens from air (2) and an analysis apparatus (21) for determining the type and/or quantity of at least one of the collected pathogens, wherein the aerosol collector (1) comprises at least one cooling apparatus (3) which has at least one condensation surface (7) on whose upper surface a condensate can be formed, wherein the cooling apparatus (3) comprises an electrical cooling, wherein the electrical cooling comprises at least one Peltier element,
wherein the aerosol collector (1) furthermore comprises at least one collection apparatus (5) in which the condensate formed at the condensation surface (7) of the cooling apparatus (3) is collected,
**characterized in that** the condensation surface is designed as movable, wherein the aerosol collector (1) has a control unit which controls a movement of the condensation surface (7).

2. A system according to claim 1, wherein the aerosol collector (1) comprises an apparatus for the onflow of the cooling apparatus (3), in particular a warm side (45) of the at least one Peltier element, by means of a gas flow.

3. A system according to at least one of the preceding claims, wherein the condensation surface (7) is designed in the form of a band or a disk, in particular as a metal band (35), e.g. as a steel band, in particular as a circumferential metal band (35) or as a glass disk or a rotatable glass disk.

4. A system according to at least one of the preceding claims, wherein the movably designed condensation surface (7) is guided via rollers (37, 39) and can be driven by at least one roller (37, 39) and/or can be rotated about an axis, in particular in the case of a disk-shaped condensation surface.

5. A system according to at least one of the preceding claims, wherein the aerosol collector (1) further comprises a scraper (41) by which a condensate formed on the condensation surface (7) can be scraped off.

6. A system according to at least one of the preceding claims, wherein at least one part of the collection apparatus (5) is exchangeable.

7. A system according to at least one of the preceding claims, wherein the aerosol collector (1) further comprises a disinfectant, in particular in the form of a UV lamp (43).

8. A system according to at least one of the preceding claims, wherein the analysis apparatus (21) is a NAAT device, preferably a PCR device or a LAMP device, in particular an RT-LAMP device.

9. A system according to at least one of the preceding claims, wherein at least one component of the analysis apparatus (21) is exchangeable, wherein the component is preferably a micro-reaction vessel which is further preferably the collection apparatus (5) at the same time.

10. A system according to at least one of the preceding claims, wherein the system comprises a sensor (29) for detecting at least a positive pathogen identification.

11. A system according to claim 10, wherein the sensor (29) is connected to at least one display (31) by which at least one signal can be generated at least when a positive test result is present.

12. A system according to claim 10, wherein the sensor (29) is connected to at least one evaluation unit (61) which evaluates a signal generated by the sensor (29) and triggers a predetermined action when a pathogen is detected, wherein the evaluation unit (61) in particular has a communication interface.

13. A system according to at least one of the preceding claims, wherein the aerosol collector further comprises a wireless communication system and a controller which comprises one or more processors and a non-volatile computer readable storage medium which stores commands for execution by the one or more processors to perform a method comprising the following steps:
detecting, by the analysis apparatus (21), the presence or absence of a pathogen in the aerosol condensate;
causing the aerosol collector to transmit a wireless communication signal through the wireless communication system, wherein the wireless communication signal comprises data that are representative of the presence or absence of the pathogen.

14. A system according to claim 14, wherein the method further comprises:
receiving, by the wireless communication system, a wireless communication signal transmitted from a mobile device, wherein the received wireless signal comprises an identification parameter;
storing the identification parameter in the non-volatile storage medium of the aerosol collector.

15. A method comprising the examination of a condensate obtained from air for pathogens of the family Coronaviridae, wherein, prior to the examination, the condensate is obtained with a system according to at least one of the preceding claims.

## Revendications

1. Système comprenant un collecteur d'aérosols (1), destiné à collecter des agents pathogènes à partir de l'air (2), et un dispositif d'analyse (21) destiné à déterminer le type et/ou la quantité de l'un au moins des agents pathogènes collectés, le collecteur d'aérosols (1) comprenant au moins un dispositif de refroidissement (3) qui présente au moins une surface de condensation (7) sur la superficie de laquelle un condensat peut être formé, le dispositif de refroidissement (3) comprenant un refroidissement électrique, le refroidissement électrique comprenant au moins un élément Peltier, le collecteur d'aérosols (1) comprenant en outre au moins un dispositif de capture (5) dans lequel le condensat formé sur la surface de condensation (7) du dispositif de refroidissement (3) s'accumule,
**caractérisé en ce que**
la surface de condensation est conçue de manière mobile, le collecteur d'aérosols (1) comprenant une unité de commande qui commande un mouvement de la surface de condensation (7).

2. Système selon la revendication 1,
dans lequel le collecteur d'aérosols (1) comprend un dispositif d'attaque du dispositif de refroidissement (3), en particulier d'une face chaude (45) dudit au moins un élément Peltier, au moyen d'un flux de gaz.

3. Système selon l'une au moins des revendications précédentes,
dans lequel la surface de condensation (7) est conçue en forme de bande ou de plaque, en particulier en forme de bande métallique (35), par exemple en forme de bande d'acier, en particulier en forme de bande métallique périphérique (35) ou de plaque en verre ou de plaque en verre rotative.

4. Système selon l'une au moins des revendications précédentes,
dans lequel la surface de condensation (7) de conception mobile est menée sur des galets (37, 39) et peut être entraînée par au moins un galet (37, 39) et/ou peut tourner autour d'un axe, en particulier dans le cas d'une surface de condensation en forme de plaque.

5. Système (1) selon l'une au moins des revendications précédentes,
dans lequel le collecteur d'aérosols (1) comprend en outre un racleur (41) permettant de racler un condensat formé sur la surface de condensation (7).

6. Système selon l'une au moins des revendications précédentes,
dans lequel au moins une partie du dispositif de capture (5) est interchangeable.

7. Système selon l'une au moins des revendications précédentes,
dans lequel le collecteur d'aérosols (1) comprend en outre un moyen de désinfection, en particulier sous la forme d'une lampe UV (43).

8. Système selon l'une au moins des revendications précédentes,
dans lequel le dispositif d'analyse (21) est un appareil NAAT, de préférence un appareil PCR ou un appareil LAMP, en particulier un appareil RT-LAMP.

9. Système selon l'une au moins des revendications précédentes,
dans lequel au moins un composant du dispositif d'analyse (21) est interchangeable, le composant étant de préférence un microtube qui, de préférence encore, est à la fois le dispositif de capture (5).

10. Système selon l'une au moins des revendications précédentes,
dans lequel le système comprend un capteur (29) pour la détection d'au moins un résultat positif de décèlement d'agents infectieux.

11. Système selon l'une au moins des revendications précédentes,
dans lequel le capteur (29) est relié à au moins un indicateur (31) qui permet de générer au moins un signal au moins en présence d'un résultat de test positif.

12. Système selon la revendication 10,
dans lequel le capteur (29) est relié à au moins une unité d'évaluation (61) qui évalue un signal généré par le capteur (29) et déclenche une action prédéterminée en cas de détection d'un agent pathogène, l'unité d'évaluation (61) présentant en particulier une interface de communication.

13. Système selon l'une au moins des revendications précédentes,
dans lequel le collecteur d'aérosols comprend en outre un système de communication sans fil, un contrôleur comprenant un ou plusieurs processeurs et un support de stockage non volatile lisible par ordinateur stockant des instructions destinées à être exécutées par le ou les processeurs, pour mettre en oeuvre un procédé comprenant les étapes suivantes consistant à :
déceler, par le dispositif d'analyse (21), la présence ou l'absence d'un agent infectieux dans le condensat d'aérosol ;
faire transmettre par le collecteur d'aérosols un signal de communication sans fil par l'intermédiaire du système de communication sans fil, le signal de communication sans fil comprenant des données représentatives de la présence ou de l'absence de l'agent infectieux.

14. Système selon la revendication 13,
le procédé consistant en outre à :
recevoir par le système de communication sans fil un signal de communication sans fil émis par un dispositif mobile, le signal reçu sans fil comprenant un paramètre d'identification ;
stocker le paramètre d'identification dans le support de stockage non volatile du collecteur d'aérosols.

15. Procédé comprenant la recherche d'agents pathogènes de la famille des Coronaviridae dans un condensat obtenu à partir de l'air, ledit condensat étant obtenu préalablement à la recherche à l'aide d'un système selon l'une au moins des revendications précédentes.
